(19) Europäisches Patentamt
European Patent Office
Office européen des brevets

(11) **EP 3 009 260 B1**

(12) **EUROPEAN PATENT SPECIFICATION**

(45) Date of publication and mention of the grant of the patent:
**29.08.2018 Bulletin 2018/35**

(51) Int Cl.:
***B29C 73/22*** (2006.01)  ***B29D 30/00*** (2006.01)
***B29D 30/06*** (2006.01)  ***B29C 73/16*** (2006.01)
***B60C 19/12*** (2006.01)

(21) Application number: **15190207.9**

(22) Date of filing: **16.10.2015**

(54) **PNEUMATIC TIRE AND METHOD FOR MANUFACTURING PNEUMATIC TIRE**

LUFTREIFEN UND VERFAHREN ZUR HERSTELLUNG EINES LUFTREIFENS

PNEU ET PROCÉDÉ DE FABRICATION DUDIT PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.10.2014 JP 2014212950**
**27.03.2015 JP 2015067157**

(43) Date of publication of application:
**20.04.2016 Bulletin 2016/16**

(73) Proprietor: **Sumitomo Rubber Industries, Ltd.**
**Kobe-shi, Hyogo-ken 651-0072 (JP)**

(72) Inventors:
• **YUKAWA, Naoki**
**Kobe-shi, Hyogo 651-0072 (JP)**

• **SUGIMOTO, Mutsuki**
**Kobe-shi, Hyogo, 651-0072 (JP)**
• **YAMADA, Satoshi**
**Kobe-shi, Hyogo 651-0072 (JP)**

(74) Representative: **Manitz Finsterwald Patentanwälte PartmbB**
**Martin-Greif-Strasse 1**
**80336 München (DE)**

(56) References cited:
**EP-A1- 0 302 400      EP-A2- 0 080 968**
**JP-A- 2001 018 609      JP-A- 2003 305 781**
**US-A- 4 115 172**

## EP 3 009 260 B1

**Description**

TECHNICAL FIELD

The present invention relates to a pneumatic tire and a method for producing a pneumatic tire.

BACKGROUND ART

Self-sealing tires which contain a sealant applied to the inner periphery thereof have been known as puncture resistant pneumatic tires (hereinafter, pneumatic tires are also referred to simply as tires). The sealant automatically seals a puncture hole formed in such self-sealing tires.
The weight of self-sealing tires changes before and after the application of the sealant, and it is desirable to reduce deterioration in the weight balance thus caused to the minimum.
Several methods have been known for producing self-sealing tires, including, for example, a method that includes adding an organic solvent to a sealant to reduce the viscosity of the sealant so as to be easy to handle, attaching the diluted sealant to the inner surface of a tire, and removing the organic solvent from the attached diluted sealant; or a method that includes mixing a base agent prepared in a batch kneader with a curing agent using a static mixer or dynamic mixer to prepare a sealant, and attaching the sealant to the inner periphery of a tire (see for example Patent Literature 1).
Patent Literature 2 discloses a method for correcting the imbalance of tires. This method includes, before the application of a sealant, preliminarily measuring the weight balance of a tire, and varying the thickness and/or width of the sealant according to the measurement results, or in other words, applying a larger amount of the sealant to a lighter portion and a smaller amount of the sealant to a heavier portion.
Patent Literature 3 discloses a method for improving the weight balance of a sealant attached to the inner surface of a tire. According to this method, a sealant is discharged onto the inner surface of the tire at the outer portion in the width direction of the tire while the nozzle is provided generally perpendicular to the inner surface of the tire to increase the area of the sealant contacting the inner surface of the tire and thereby reduce dropping of the sealant toward the center in the width direction of the tire.
JP 2001-18609 A relates to a pneumatic tire having a sealing layer hermetically sealing the tire by affixing a paste-like adhesive sealing material to the inner peripheral surface of the pneumatic tire and by precisely adjusting the weight balance of the respective layer.
JP 2003-305, 781 A relates to a method for controlling the winding of a strip material for molding a pneumatic tire by winding the strip material around a molding drum.
EP 0 302 400 A1 discloses a sealant product consisting essentially of an extruded, generally flat strip of a surface-detackified homogeneous mixture of a high molecular weight and low molecular weight elastomers present in a certain weight ratio, a processing aid, a curing agent and a stabilizer.

CITATION LIST

PATENT LITERATURE

Patent Literature 1: JP 2010-528131 T
Patent Literature 2: JP 2001-18609 A
Patent Literature 3: JP 2014-217953 A

SUMMARY OF INVENTION

TECHNICAL PROBLEM

Unfortunately, Patent Literatures 1 to 3 do not provide sufficient investigation of the shape of the sealant and the weight balance due to the sealant, and leave room for improvement in the uniformity of self-sealing tires. Moreover, all the methods still have room for improvement in terms of stably producing self-sealing tires excellent in uniformity with high productivity.
The present invention aims to solve the problems and provide a pneumatic tire (self-sealing tire) excellent in uniformity.

SOLUTION TO PROBLEM

The present invention relates to a pneumatic tire (self-sealing tire), including a sealant layer located radially inside an innerliner, the pneumatic tire being produced by continuous and spiral application of a generally string-shaped sealant to an inner periphery of the tire under conditions satisfying the following Expression (I):

$$A = LS \times T \times \rho \times LD \leq 6100 \qquad \text{Expression (I)}$$

wherein LS represents a length in mm by which the position of the application shifts in the width direction of the tire per turn of the spiral; T represents a thickness in mm of the sealant; $\rho$ represents a specific gravity of the sealant; and LD represents a length in mm of a difference in the circumferential direction of the tire between beginning and ending points of the sealant application, wherein the length LS is 0.9 to 7.1 mm.
The thickness T of the sealant is preferably 1.0 to 10 mm.
The sealant preferably has a generally constant cross-sectional shape.
The sealant layer is preferably formed of the sealant of a substantially consistent quality.
The sealant layer is preferably formed by continuously applying a piece of the sealant to the inner periphery of the tire.
The pneumatic tire is preferably produced by sequentially applying to the inner periphery of the tire the sealant sequentially prepared by mixing raw materials including a crosslinking agent using a continuous kneader.
The pneumatic tire is preferably produced by sequentially applying to the inner periphery of the tire the sealant discharged from a nozzle connected to an outlet of a continuous kneader.
The sealant preferably contains, relative to 100 parts by mass of a rubber component including a butyl-based rubber, 50 to 300 parts by mass of a liquid polymer, 0.5 to 40 parts by mass of a crosslinking agent, and 0.5 to 40 parts by mass of a crosslinking activator.
The present invention also relates to a method for producing a pneumatic tire (self-sealing tire) according to claim 8 including a sealant layer located radially inside an innerliner,
the method including continuous and spiral application of a generally string-shaped sealant to an inner periphery of the tire under conditions satisfying the following Expression (I) :

$$A = LS \times T \times \rho \times LD \leq 6100 \qquad \text{Expression (I)}$$

wherein LS represents a length in mm by which the position of the application shifts in the width direction of the tire per turn of the spiral; T represents a thickness in mm of the sealant; $\rho$ represents a specific gravity of the sealant; and LD represents a length in mm of a difference in the circumferential direction of the tire between beginning and ending points of the sealant application, wherein the length LS is 0.9 to 7.1 mm.

ADVANTAGEOUS EFFECTS OF INVENTION

The pneumatic tire (self-sealing tire) of the present invention is a self-sealing tire including a sealant layer located radially inside an innerliner. The self-sealing tire is produced by continuous and spiral application of a generally string-shaped sealant to the inner periphery of the tire under conditions satisfying the above Expression (I). Such a self-sealing tire is less likely to lose the balance due to the sealant and thus deterioration of tire uniformity can be reduced.
Moreover, the method for producing a pneumatic tire (self-sealing tire) of the present invention includes continuous and spiral application of a generally string-shaped sealant to the inner periphery of the tire under conditions satisfying the above Expression. Such a method allows self-sealing tires excellent in uniformity to be stably produced with high productivity.

BRIEF DESCRIPTION OF DRAWINGS

Fig. 1 is an explanatory view schematically showing an example of an applicator used in a method for producing a self-sealing tire of the present invention.
Fig. 2 is an enlarged view showing the vicinity of the tip of a nozzle provided with the applicator shown in Fig. 1.
Fig. 3 is an explanatory view schematically showing the positional relationship of the nozzle to the tire.

Fig. 4 is an explanatory view schematically showing an example of a generally string-shaped sealant continuously and spirally attached to the inner periphery of the tire.

Figs. 5 are enlarged views showing the vicinity of the tip of a nozzle provided with the applicator shown in Fig. 1.

Fig. 6 is an explanatory view schematically showing an example of a sealant attached to a self-sealing tire.

Fig. 7 is an explanatory view schematically showing an example of a production facility used in a method for producing a self-sealing tire.

Fig. 8 is an explanatory view schematically showing an example of a cross section of the sealant shown in Fig. 4 when the sealant is cut along the A-A straight line orthogonal to the direction along which the sealant is applied (the longitudinal direction).

Fig. 9 is an explanatory view schematically showing an example of a cross section of a pneumatic tire.

Fig. 10 is an explanatory view schematically showing an example of a generally string-shaped sealant continuously and spirally attached to the inner peripheral surface of a tire.

Fig. 11 is an explanatory view schematically showing an example of a generally string-shaped sealant continuously and spirally attached to the inner periphery of a tire.

DESCRIPTION OF EMBODIMENTS

The pneumatic tire (self-sealing tire) of the present invention is a self-sealing tire including a sealant layer located radially inside an innerliner. The self-sealing tire is produced by continuous and spiral application of a generally string-shaped sealant to the inner periphery of the tire under conditions satisfying the Expression (I) below.

Moreover, the method for producing a pneumatic tire (self-sealing tire) of the present invention is a method for producing a self-sealing tire including a sealant layer located radially inside an innerliner. The method includes continuous and spiral application of a generally string-shaped sealant to the inner periphery of the tire under conditions satisfying the Expression (I) below.

$$A = LS \times T \times \rho \times LD \leq 6100 \quad \text{Expression (I)}$$

In Expression (I), LS represents the length (mm) by which the position of the application shifts in the width direction of the tire per turn of the spiral; T represents the thickness (mm) of the sealant; ρ represents the specific gravity of the sealant; and LD represents the length (mm) of the difference in the circumferential direction of the tire between the beginning and ending points of the sealant application.

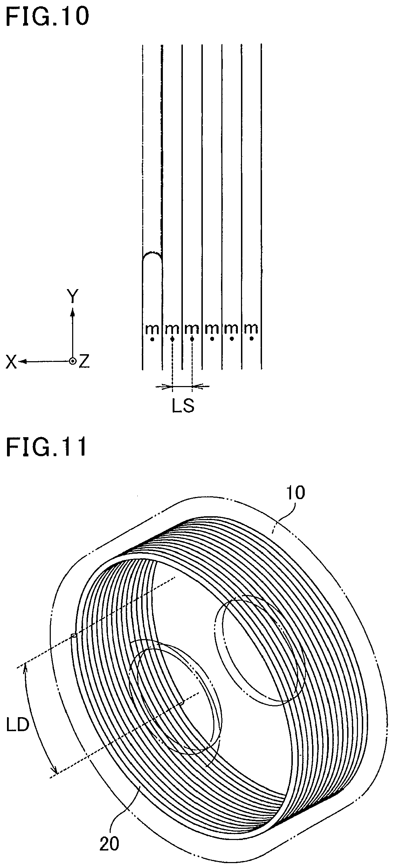

Fig. 10 schematically illustrates an example of a generally string-shaped sealant continuously and spirally attached to the inner periphery of a tire. The length by which the position of the application shifts in the width direction of the tire per turn of the spiral refers to the length by which the position of the application shifts in the width direction of the tire while one turn of the sealant is applied around the inner periphery of the tire, namely during one rotation of the tire. Specifically, the length is indicated by LS in Fig. 10. The position of the application refers to the middle of the attached sealant in the width direction of the tire (position indicated by m in Fig. 10). A larger LS value provides a larger area without the sealant attached, as indicated by the long dashed short dashed line in Fig. 10, thereby causing deterioration in the weight balance of the tire.

Fig. 11 schematically illustrates an example of a generally string-shaped sealant continuously and spirally attached to the inner periphery of a tire.

The length of the difference in the circumferential direction of the tire between the beginning and ending points of the sealant application refers to the length in the circumferential direction of the tire between a line extrapolated from the beginning point of the application in parallel with the width direction of the tire and a line extrapolated from the ending point of the application in parallel with the width direction of the tire. Specifically, the length is indicated by LD in Fig. 11.

The beginning point of the application refers to the center of a cross section of the sealant orthogonal to the direction along which the sealant is applied (the longitudinal direction) in the position where the application of the sealant begins. The ending point of the application refers to the center of a cross section of the sealant orthogonal to the direction along which the sealant is applied (the longitudinal direction) in the position where the application of the sealant ends. The extrapolated lines pass through the centers of the cross sections of the sealant orthogonal to the direction along which the sealant is applied (the longitudinal direction).

The length in the circumferential direction of the tire refers to the length between one of the above extrapolated lines and the other extrapolated line along the shape of the inner surface of the tire. Specifically, the length means the length of a curved line drawn from one of the above extrapolated lines to the other extrapolated line, passing through the center of each cross section of the sealant orthogonal to the direction along which the sealant is applied (the longitudinal direction). For example, since a line extrapolated from the beginning point of the application in parallel with the width direction of the tire passes through the beginning point of the application, the length in the circumferential direction of the tire means the length of a curved line drawn from the "beginning point of the application" until the curved line crosses "the line extrapolated from the ending point of the application in parallel with the width direction of the tire", passing through the center of each cross section of the sealant orthogonal to the direction along which the sealant is applied (the longitudinal direction).

Here, two lines can be drawn as the curved line: one extending in the same direction as the direction along which the sealant is applied and one extending in the direction opposite to the direction along which the sealant is applied. In the present invention, the length of the shorter one of the two curved lines is taken as the length in the circumferential direction of the tire.

Herein, the specific gravity p of the sealant refers to the specific gravity of the sealant at 20°C which is determined in conformity with JIS K 6220.

In the continuous and spiral application of a generally string-shaped sealant to the inner periphery of the tire, preferably a substantially constant amount (discharge amount) of the sealant is discharged from the outlet of a continuous kneader or the like because a self-sealing tire excellent in uniformity and sealing performance can be suitably obtained. Namely, the sealant is preferably applied at a constant flow rate to the inner periphery of the tire. In view of uniformity, obviously it is ideal in this case that there be no difference in the circumferential direction of the tire between the beginning and ending points of the sealant application. However, it is difficult to control the difference to zero in the practical production, and thus a wider or thicker sealant more affects the weight balance of the tire.

As a result of intensive investigation, the present inventors have realized that the weight balance of a tire is largely affected by the unit mass of the sealant to be applied and is proportional to the amount of sliding of the tire (LS), which correlates with the width of the sealant, the thickness (T) of the sealant, the specific gravity (p) of the sealant, and the amount of the phase difference (LD) between the beginning and ending points of the sealant application. The present inventors have found out that if the value of A calculated according to the above Expression (I) is a predetermined value or lower, deterioration in uniformity can be reduced to a range with little risk of vibration during high-speed driving. Accordingly, the present invention has been completed.

In the above Expression (I), A indicates the degree of influence of the applied sealant on the weight balance of the tire. Imbalance of a self-sealing tire is due to the weight distribution of the sealant in the area to which the sealant is applied. Among the four factors on the right side of Expression (I), LS and LD are factors that directly change the weight distribution; LS can cause a difference in the weight in the width direction of the tire, while LD can cause a difference in the weight in the circumferential direction of the tire. T, $\rho$, and LS correlate with the unit mass of the sealant to be applied. A larger A tends to result in a self-sealing tire having lower uniformity.

By continuous and spiral application of a generally string-shaped sealant to the inner periphery of a tire, a self-sealing tire excellent in uniformity can be stably produced with high productivity. Since the self-sealing tire produced by the above method includes a sealant layer in which the sealant is uniformly provided in the circumferential and width directions (especially in the circumferential direction) of the tire, the self-sealing tire is less likely to lose the balance due to the sealant and thus deterioration of tire uniformity can be reduced. Moreover, since the self-sealing tire includes a sealant layer with a uniform sealant, the self-sealing tire has excellent sealing performance as well.

Furthermore, in the present invention, by continuous and spiral application of a generally string-shaped sealant to the inner periphery of a tire under conditions satisfying the above Expression (I), deterioration of tire uniformity can be further reduced.

As described above, LD is ideally zero, or in other words, it is ideal there be no difference in the circumferential direction of the tire between the beginning and ending points of the sealant application. Even when LD is not zero, a self-sealing tire excellent in uniformity and sealing performance can be stably produced with high productivity by continuous and spiral application of a generally string-shaped sealant to the inner periphery of a tire under conditions satisfying Expression (I). Namely, a self-sealing tire excellent in uniformity and sealing performance can be stably produced with high productivity by using Expression (I) as an index.

In the case of a sealant having a specific gravity p of 0.93, for example, if the sealant has a thickness T of 1.0 mm, the risk of imbalance due to the beginning and ending points of the application is found to be small when the amount of sliding LS is 6.4 mm or less. In contrast, if the sealant has a thickness T of 10 mm, the beginning and ending points of the application have a larger influence on imbalance when the amount of sliding LS is 6.4 mm or more, and then the length of the difference LD needs to be controlled to 100 mm or less. Thus, by using Expression (I) as an index, a self-sealing tire excellent in uniformity and sealing performance can be stably produced with high productivity.

In particular, when a sealant having a composition described later is used as the sealant, a self-sealing tire more excellent in uniformity and sealing performance can be suitably obtained. Since the sealant having the later-described composition has a low fluidity even at high temperatures, a self-sealing tire with more excellent uniformity can be provided.

The sealant having the later-described composition can achieve a balanced improvement in adhesion, sealing performance, fluidity, and processability specifically when it contains an organic peroxide as a crosslinking agent or when it contains a mixture of a rubber component including a butyl-based rubber with a liquid polymer such as liquid polybutene, and especially with a combination of two or more liquid polymers having different viscosities. In this case, the effects of the present invention can be more suitably achieved. This is presumably because the introduction of a liquid polymer component to an organic peroxide crosslinking system including butyl rubber as the rubber component provides the sealant with adhesion and the use of in particular liquid polymers having different viscosities suppresses flowing of the sealant during high-speed driving (at high temperatures), as a result of which the desired uniformity can be maintained.

The following describes suitable examples of the method for producing a self-sealing tire of the present invention.

According to the present invention, a self-sealing tire can be produced, for example, by preparing a sealant by mixing the components of the sealant, and then attaching the sealant to the inner periphery of a tire by application or the like to form a sealant layer. The self-sealing tire includes the sealant layer located radially inside an innerliner.

The hardness (viscosity) of the sealant needs to be controlled to an appropriate viscosity according to the service temperature by adjusting the rubber component and the degree of crosslinking. Then, the rubber component is controlled by adjusting the types or amounts of liquid rubber, plasticizer, and carbon black, while the degree of crosslinking is controlled by adjusting the types or amounts of crosslinking agent and crosslinking activator.

Any sealant having adhesiveness may be used, and rubber compositions conventionally used to seal punctures of tires can be used. The rubber component constituting a main ingredient of the rubber composition includes a butyl-based rubber. Examples of the butyl-based rubber include butyl rubber (IIR) and halogenated butyl rubbers (X-IIR) such as brominated butyl rubber (Br-IIR) or chlorinated butyl rubber (Cl-IIR). In particular, in view of fluidity and the like, either or both of butyl rubber and a halogenated butyl rubber can be suitably used. The butyl-based rubber to be used is preferably in the form of pellets. Such a pelletized butyl-based rubber can be precisely and suitably supplied to a continuous kneader so that the sealant can be produced with high productivity.

To suppress a reduction in the fluidity of the sealant, the butyl-based rubber to be used is preferably a butyl-based rubber A having a Mooney viscosity $ML_{1+8}$ at 125°C of at least 20 but less than 40 and/or a butyl-based rubber B having a Mooney viscosity $ML_{1+8}$ at 125°C of at least 40 but not more than 80. In particular, use of at least the butyl-based rubber A is suitable. When the butyl-based rubbers A and B are used in combination, the blending ratio may be appropriately chosen.

The Mooney viscosity $ML_{1+8}$ at 125°C of the butyl-based rubber A is more preferably 25 or more, still more preferably 28 or more, while it is more preferably 38 or less, still more preferably 35 or less. If the Mooney viscosity is less than 20, the fluidity may be reduced. If the Mooney viscosity is 40 or more, the effect of the combination, if used, may not be obtained.

The Mooney viscosity $ML_{1+8}$ at 125°C of the butyl-based rubber B is more preferably 45 or more, still more preferably 48 or more, while it is more preferably 70 or less, still more preferably 60 or less. If the Mooney viscosity is less than 40, the effect of the combination, if used, may not be obtained. If the Mooney viscosity is more than 80, sealing performance may be reduced.

The Mooney viscosity $ML_{1+8}$ at 125°C is determined in conformity with JIS K-6300-1:2001 at a test temperature of 125°C using an L type rotor with a preheating time of one minute and a rotation time of eight minutes.

The rubber component may be a combination with another component such as diene rubbers, including natural rubber (NR), polyisoprene rubber (IR), polybutadiene rubber (BR), styrene-butadiene rubber (SBR), styrene-isoprene-butadiene rubber (SIBR), ethylene-propylene-diene rubber (EPDM), chloroprene rubber (CR), acrylonitrile-butadiene rubber (NBR), and butyl rubber (IIR) . In view of fluidity and the like, the amount of the butyl-based rubber based on 100% by mass of the rubber component is preferably 90% by mass or more, more preferably 95% by mass or more, particularly preferably 100% by mass.

Examples of the liquid polymer used in the sealant include liquid polybutene, liquid polyisobutene, liquid polyisoprene, liquid polybutadiene, liquid poly-$\alpha$-olefin, liquid isobutylene, liquid ethylene-$\alpha$-olefin copolymers, liquid ethylene-propylene copolymers, and liquid ethylene-butylene copolymers. To provide adhesion and the like, liquid polybutene is preferred among these. Examples of the liquid polybutene include copolymers having a long-chain hydrocarbon molecular structure based on isobutene which is further reacted with normal butene. Hydrogenated liquid polybutene may also be used.

To prevent the sealant from flowing during high-speed driving, the liquid polymer such as liquid polybutene to be used is preferably a liquid polymer A having a kinematic viscosity at 100°C of 550 to 625 $mm^2/s$ and/or a liquid polymer B having a kinematic viscosity at 100°C of 3,540 to 4,010 $mm^2/s$, more preferably a combination of the liquid polymers A and B.

The kinematic viscosity at 100°C of the liquid polymer A such as liquid polybutene is preferably 550 $mm^2/s$ or higher, more preferably 570 $mm^2/s$ or higher. If the kinematic viscosity is lower than 550 $mm^2/s$, flowing of the sealant may occur. The kinematic viscosity at 100°C is preferably 625 $mm^2/s$ or lower, more preferably 610 $mm^2/s$ or lower. If the kinematic viscosity is higher than 625 $mm^2/s$, the sealant may have higher viscosity and deteriorated extrudability.

The kinematic viscosity at 100°C of the liquid polymer B such as liquid polybutene is preferably 3,600 $mm^2/s$

or higher, more preferably 3,650 mm$^2$/s or higher. If the kinematic viscosity is lower than 3,540 mm$^2$/s, the sealant may have too low a viscosity and readily flow during service of the tire, resulting in deterioration in sealing performance and uniformity.

The kinematic viscosity at 100°C is preferably 3, 900 mm$^2$/s or lower, more preferably 3,800 mm$^2$/s or lower. If the kinematic viscosity is higher than 4,010 mm$^2$/s, sealing performance may be deteriorated.

The kinematic viscosity at 40°C of the liquid polymer A such as liquid polybutene is preferably 20,000 mm$^2$/s or higher, more preferably 23,000 mm$^2$/s or higher. If the kinematic viscosity is lower than 20,000 mm$^2$/s, the sealant may be soft and its flowing may occur. The kinematic viscosity at 40°C is preferably 30,000 mm$^2$/s or lower, more preferably 28,000 mm$^2$/s or lower. If the kinematic viscosity is higher than 30,000 mm$^2$/s, the sealant may have too high a viscosity and deteriorated sealing performance.

The kinematic viscosity at 40°C of the liquid polymer B such as liquid polybutene is preferably 120,000 mm$^2$/s or higher, more preferably 150,000 mm$^2$/s or higher. If the kinematic viscosity is lower than 120,000 mm$^2$/s, the sealant may have too low a viscosity and readily flow during service of the tire, resulting in deterioration in sealing performance and uniformity. The kinematic viscosity at 40°C is preferably 200,000 mm$^2$/s or lower, more preferably 170,000 mm$^2$/s or lower. If the kinematic viscosity is higher than 200,000 mm$^2$/s, the sealant may have too high a viscosity and deteriorated sealing performance.

The kinematic viscosity is determined in conformity with JIS K 2283-2000 at 100°C or 40°C.

The amount of the liquid polymer (the combined amount of the liquid polymers A and B and the like) relative to 100 parts by mass of the rubber component is preferably 50 parts by mass or more, more preferably 100 parts by mass or more, still more preferably 150 parts by mass or more. If the amount is less than 50 parts by mass, adhesion may be reduced. The amount of the liquid polymer is preferably 400 parts by mass or less, more preferably 300 parts by mass or less, still more preferably 250 parts by mass or less. If the amount is more than 400 parts by mass, flowing of the sealant may occur.

In the case where the liquid polymers A and B are used in combination, the blending ratio of these polymers [(amount of liquid polymer A) / (amount of liquid polymer B)] is preferably 10/90 to 90/10, more preferably 30/70 to 70/30, still more preferably 40/60 to 60/40. When the blending ratio is within the range described above, the sealant is provided with good adhesion.

The organic peroxide (crosslinking agent) is not particularly limited, and may be any conventionally known compound. Use of a butyl-based rubber or a liquid polymer in an organic peroxide crosslinking system improves adhesion, sealing performance, fluidity, and processability.

Examples of the organic peroxide include acyl peroxides such as benzoyl peroxide, dibenzoyl peroxide, or p-chlorobenzoyl peroxide; peroxyesters such as 1-butyl peroxyacetate, t-butyl peroxybenzoate, or t-butyl peroxyphthalate; ketone peroxides such as methyl ethyl ketone peroxide; alkyl peroxides such as di-t-butyl peroxybenzoate or 1,3-bis(1-butylperoxyisopropyl)benzene; hydroperoxides such as t-butyl hydroperoxide; and dicumyl peroxide and t-butylcumyl peroxide. In particular, in view of adhesion and fluidity, acyl peroxides are preferred, and dibenzoyl peroxide is particularly preferred. Moreover, the organic peroxide (crosslinking agent) to be used is preferably in the form of powder. Such a powdered organic peroxide (crosslinking agent) can be precisely and suitably supplied to a continuous kneader so that the sealant can be produced with high productivity.

The amount of the organic peroxide (crosslinking agent) relative to 100 parts by mass of the rubber component is preferably 0.5 parts by mass or more, more preferably 1 part by mass or more, still more preferably 5 parts by mass or more. If the amount is less than 0.5 parts by mass, crosslink density decreases so that flowing of the sealant may occur. The amount is preferably 40 parts by mass or less, more preferably 20 parts by mass or less, still more preferably 15 parts by mass or less. If the amount is more than 40 parts by mass, crosslink density increases so that the sealant may be hardened and have reduced sealing performance.

The crosslinking activator (vulcanization accelerator) to be used may be at least one selected from the group consisting of sulfenamide crosslinking activators, thiazole crosslinking activators, thiuram crosslinking activators, thiourea crosslinking activators, guanidine crosslinking activators, dithiocarbamate crosslinking activators, aldehyde-amine crosslinking activators, aldehyde-ammonia crosslinking activators, imidazoline crosslinking activators, xanthate crosslinking activators, and quinone dioxime compounds (quinoid compounds). For example, quinone dioxime compounds (quinoid compounds) can be suitably used. Use of a butyl-based rubber or a liquid polymer in a crosslinking system including such a crosslinking activator added to an organic peroxide improves adhesion, sealing performance, fluidity, and processability.

Examples of the quinone dioxime compound include p-benzoquinone dioxime, p-quinone dioxime, p-quinone dioxime diacetate, p-quinone dioxime dicaproate, p-quinone dioxime dilaurate, p-quinone dioxime distearate, p-quinone dioxime dicrotonate, p-quinone dioxime dinaphthenate, p-quinone dioxime succinate, p-quinone dioxime adipate, p-quinone dioxime difuroate, p-quinone dioxime dibenzoate, p-quinone dioxime di(o-chlorobenzoate), p-quinone dioxime di(p-chlorobenzoate), p-quinone dioxime di(p-nitrobenzoate), p-quinone dioxime di(m-nitrobenzoate), p-quinone dioxime di(3,5-dinitrobenzoate), p-quinone dioxime di(p-methoxybenzoate), p-quinone dioxime di(n-amyloxybenzoate), and p-quinone dioxime di (m-bromobenzoate) . In view of adhesion, sealing performance, and fluidity, p-benzoquinone dioxime is preferred among these. Moreover, the crosslinking activator (vulcanization accelerator) to be used is preferably in the form of powder. Such a powdered crosslinking activator (vulcanization accelerator) can be precisely and suitably supplied to a continuous kneader so that the sealant can be produced with high productivity.

The amount of the crosslinking activator such as a quinone dioxime compound relative to 100 parts by mass of the rubber component is preferably 0.5 parts by mass or more, more preferably 1 part by mass or more, still more preferably 3 parts by mass or more. If the amount is less than 0.5 parts by mass, flowing of the sealant may occur. The amount of the crosslinking activator is preferably 40 parts by mass or less, more preferably 20 parts by mass or less, still more preferably 15 parts by mass or less. If the amount is more than 40 parts by mass, sealing performance may be reduced.

The sealant may contain an inorganic filler such as carbon black, silica, calcium carbonate, calcium silicate, magnesium oxide, aluminum oxide, barium sulfate, talc, or mica; or a plasticizer such as aromatic process oil, naphthenic process oil, or paraffinic process oil.

The amount of the inorganic filler relative to 100 parts by mass of the rubber component is preferably 1 part by mass or more, more preferably 10 parts by mass or more. If the amount is less than 1 part by mass, sealing performance may be reduced due to degradation by ultraviolet rays. The amount of the inorganic filler is preferably 50 parts by mass or less, more preferably 40 parts by mass or less, still more preferably 30 parts by mass or less. If the amount is more than 50 parts by mass, the sealant may have too high a viscosity and deteriorated sealing performance.

To prevent degradation by ultraviolet rays, the inorganic filler is preferably carbon black. In this case, the amount of the carbon black relative to 100 parts by mass of the rubber component is preferably 1 part by mass or more, more preferably 10 parts by mass or more. If the amount is less than 1 part by mass, sealing performance may be reduced due to degradation by ultraviolet rays. The amount of the carbon black is preferably 50 parts by mass or less, more preferably 40 parts by mass or less, still more preferably 25 parts by mass or less. If the amount is more than 50 parts by mass, the sealant may have too high a viscosity and deteriorated sealing performance.

The amount of the plasticizer relative to 100 parts by mass of the rubber component is preferably 1 part by mass or more, more preferably 5 parts by mass or more. If the amount is less than 1 part by mass, the sealant may exhibit lower adhesion to tires and may not have sufficient sealing performance. The amount of the plasticizer is preferably 40 parts by mass or less, more preferably 20 parts by mass or less. If the amount is more than 40 parts by mass, the sealant may slide in a kneader so that it may not be readily kneaded.

The sealant is preferably prepared by mixing a pelletized butyl-based rubber, a powdered crosslinking agent, and a powdered crosslinking activator, more preferably by mixing a pelletized butyl-based rubber, a liquid polybutene, a plasticizer, carbon black powder, a powdered crosslinking agent, and a powdered crosslinking activator. Such raw materials can be suitably supplied to a continuous kneader so that the sealant can be produced with high productivity.

The sealant is preferably obtained by combining a rubber component including butyl rubber with predetermined amounts of a liquid polymer, an organic peroxide, and a crosslinking activator.

The sealant can achieve a balanced improvement in adhesion, sealing performance, fluidity, and processability when it contains a mixture of butyl rubber and a liquid polymer such as liquid polybutene, and especially a combination of butyl rubber and a liquid polymer including two or more materials having different viscosities from one another. This is because the introduction of a liquid polymer component to an organic peroxide crosslinking system including butyl rubber as the rubber component provides the sealant with adhesion and the use of in particular liquid polymers having different viscosities and solid butyl rubber suppresses flowing of the sealant during high-speed driving, as a result of which a balanced improvement in adhesion, sealing performance, fluidity, and processability can be achieved.

The viscosity at 40°C of the sealant is not particularly limited. In view of adhesion and fluidity and to allow the sealant to suitably maintain a generally string shape when it is applied to the inner periphery of the tire, for example, the viscosity at 40°C is preferably 3,000 Pa·s or higher, more preferably 5,000 Pa·s or higher, while it is preferably 70,000 Pa·s or lower, more preferably 50,000 Pa·s or lower. If the viscosity is lower than 3,000 Pa·s, the applied sealant may flow when the tire stops rotating, so that the sealant may not maintain the film thickness. Also, if the viscosity is higher than 70,000 Pa·s, the sealant cannot be readily discharged from the nozzle.

The viscosity of the sealant is determined at 40°C in conformity with JIS K 6833 using a rotational viscometer.

A self-sealing tire including a sealant layer located radially inside an innerliner can be produced by preparing a sealant by mixing the aforementioned materials, and applying the sealant to the inner periphery of a tire, and preferably to a radially inner face of an innerliner. The materials of the sealant can be mixed using known continuous kneaders, for example. In particular, they are preferably mixed using a co-rotating or counter-rotating multi-screw kneading extruder, and especially a twin screw kneading extruder.

The continuous kneader (especially twin screw kneading extruder) preferably has a plurality of supply ports for supplying raw materials, more preferably at least three supply ports, still more preferably at least three supply ports including upstream, midstream, and downstream supply ports. By sequentially supplying the raw materials to the continuous kneader (especially twin screw kneading extruder), the raw materials are mixed and continuously prepared into a sealant.

Preferably, the raw materials are sequentially supplied to the continuous kneader (especially twin screw kneading extruder), starting from the raw material having a higher viscosity. In this case, the materials can be sufficiently mixed and prepared into a sealant of a consistent quality. Moreover, powder materials, which improve kneadability, are desirably introduced at a position as upstream as possible.

The organic peroxide is preferably supplied from a downstream supply port of the continuous kneader (especially twin screw kneading extruder). In this case, the time period from supplying the organic peroxide to applying the sealant to a tire can be shortened, and thus the sealant can be applied to a tire before curing, resulting in more stable production of self-sealing tires.

Since kneading is unsuccessfully accomplished when a large amount of liquid polymer is introduced at once into the continuous kneader (especially twin screw kneading extruder), the liquid polymer is preferably supplied to the continuous kneader (especially twin screw kneading extruder) from a plurality of supply ports. In this case, the sealant can be more suitably kneaded.

When the continuous kneader (especially twin screw kneading extruder) is used, the sealant is preferably prepared using the continuous kneader (especially twin screw kneading extruder) having at least three supply ports by supplying a rubber component such as a butyl-based rubber, an inorganic filler, and a crosslinking activator each from an upstream supply port, a liquid polymer B from a midstream supply port, and a liquid polymer A, an organic peroxide, and a plasticizer each from a downstream supply port of the continuous kneader (especially twin screw kneading extruder), followed by kneading and extrusion. The materials such as a liquid polymer may be entirely or partly supplied from the respective supply ports. Preferably, 95% by mass or more of the entire amount of each material is supplied from the supply port.

. Preferably, all the raw materials to be supplied to the continuous kneader are introduced into the continuous kneader under the control of a quantitative feeder. This allows for continuous and automated preparation of the sealant.

Any feeder that can provide quantitative feeding may be used, including known feeders such as screw feeders, plunger pumps, gear pumps, and mohno pumps.

Preferably, solid raw materials (especially pellets or powder) such as a pelletized butyl-based rubber, carbon black powder, a powdered crosslinking agent, or a powdered crosslinking activator are quantitatively supplied using a screw feeder. This allows the solid raw materials to be supplied precisely in fixed amounts, thereby enabling the production of a higher quality sealant and therefore a higher quality self-sealing tire.

Moreover, the solid raw materials are preferably individually supplied through separate feeders. In this case, the raw materials need not to be blended beforehand, which facilitates supply of the materials in the mass production.

The plasticizer is preferably quantitatively supplied using a plunger pump. This allows the plasticizer to be supplied precisely in a fixed amount, thereby enabling the production of a higher quality sealant and therefore a higher quality self-sealing tire.

The liquid polymer is preferably quantitatively supplied using a gear pump. This allows the liquid polymer to be supplied precisely in a fixed amount, thereby enabling the production of a higher quality sealant and therefore a higher quality self-sealing tire.

The liquid polymer to be supplied is preferably kept under constant temperature control. The constant temperature control allows the liquid polymer to be supplied more precisely in a fixed amount. The liquid polymer to be supplied preferably has a temperature of 20°C to 90°C, more preferably 40°C to 70°C.

In view of easy mixing and extrudability, the mixing in the continuous kneader (especially twin screw kneading extruder) is preferably carried out at a barrel temperature of 30°C (preferably 50°C) to 150°C.

In view of sufficient mixing, preferably the materials supplied upstream are mixed for 1 to 3 minutes and the materials supplied midstream are mixed for 1 to 3 minutes. In view of avoiding crosslinking, the materials supplied downstream are preferably mixed for 0.5 to 2 minutes. The times for mixing each refer to the residence time in the continuous kneader (especially twin screw kneading extruder) from supply to discharge. For example, the time for mixing the materials supplied downstream means the residence time from when they are supplied through a downstream supply port until they are discharged.

By adjusting the screw rotational speed of the continuous kneader (especially twin screw kneading extruder) or the setting of a temperature controller, the temperature of the sealant discharged from the outlet can be controlled and therefore the rate of curing acceleration of the sealant can be controlled. As the screw rotational speed of the continuous kneader (especially twin screw kneading extruder) is increased, kneadability and material temperature increase. The screw rotational speed does not affect the discharge amount. In view of sufficient mixing and control of the rate of curing acceleration, the screw rotational speed is preferably 50 to 700 (preferably 550) rpm.

In view of sufficient mixing and control of the rate of curing acceleration, the temperature of the sealant discharged from the outlet of the continuous kneader (especially twin screw kneading extruder) is preferably 70°C to 150°C, more preferably 90°C to 130°C. When the temperature of the sealant is within the range described above, the crosslinking reaction begins upon the application of the sealant and the sealant adheres well to the inner periphery of a tire and, at the same time, the crosslinking reaction more suitably proceeds, whereby a self-sealing tire having high sealing performance can be produced. Moreover, a crosslinking step described later is not required in this case.

The amount of the sealant discharged from the outlet of the continuous kneader (especially twin screw kneading extruder) is determined according to the amounts of the raw materials supplied to the supply ports. The amounts of the raw materials supplied to the supply ports are not particularly limited, and a person skilled in the art can appropriately select the amounts. To suitably produce a self-sealing tire more excellent in uniformity and sealing performance, preferably a substantially constant amount (discharge amount) of the sealant is discharged from the outlet.

Herein, the substantially constant discharge amount means that the discharge amount varies within a range of 93 to 107%, preferably 97 to 103%, more preferably 98 to 102%, still more preferably 99 to 101%.

The outlet of the continuous kneader (especially twin screw kneading extruder) is preferably connected to a nozzle. Since the continuous kneader (especially twin screw kneading extruder) can discharge the materials at a high pressure, the sealant prepared through a nozzle (preferably a small diameter nozzle creating high fluid resistance) mounted on the outlet can be attached to a tire in the form of a thin, generally string (bead) . Specifically, by discharging the sealant from a nozzle connected to the outlet of the continuous kneader (especially twin screw kneading extruder) and sequentially applying it to the inner periphery of a tire, the applied sealant has a substantially constant thickness, thereby preventing deterioration of tire uniformity. Thus, a self-sealing tire excellent in weight balance can be produced.

Next, for example, the mixed sealant is discharged from the nozzle connected to the outlet of the continuous kneader (especially twin screw kneading extruder) or other extruders to feed and apply the sealant directly to the inner periphery of a vulcanized tire, whereby a self-sealing tire can be produced. In this case, since the sealant which has been mixed in a twin screw kneading extruder or the like and, further, in which the crosslinking reaction in the extruder is suppressed is directly applied to the tire inner periphery, the crosslinking reaction of the sealant begins upon the application and the sealant adheres well to the tire inner periphery and, at the same time, the crosslinking reaction suitably proceeds . For this reason, the sealant applied to the tire inner periphery suitably forms a sealant layer while maintaining a generally string shape. Accordingly, the sealant can be applied and processed in a series of steps so that productivity is further enhanced. Moreover, the application of the sealant to the inner periphery of a vulcanized tire further enhances the productivity of self-sealing tires. Furthermore, the sealant discharged from the nozzle connected to the outlet of the continuous kneader (especially twin screw kneading extruder) is preferably sequentially applied directly to the inner periphery of the tire. In this case, since the sealant in which the crosslinking reaction in the continuous kneader (especially twin screw kneading extruder) is suppressed is directly and continuously applied to the tire inner periphery, the crosslinking reaction of the sealant begins upon the application and the sealant adheres well to the tire inner periphery and, at the same time, the crosslinking reaction suitably proceeds, whereby a self-sealing tire excellent in weight balance can be produced with higher productivity.

With regard to the application of the sealant to the inner periphery of a tire, the sealant may be applied to at least an inner periphery of a tire corresponding to a tread portion, more preferably at least an inner periphery of a tire corresponding to a breaker. Omitting the application of the sealant to areas where the sealant is unnecessary further enhances the productivity of self-sealing tires.

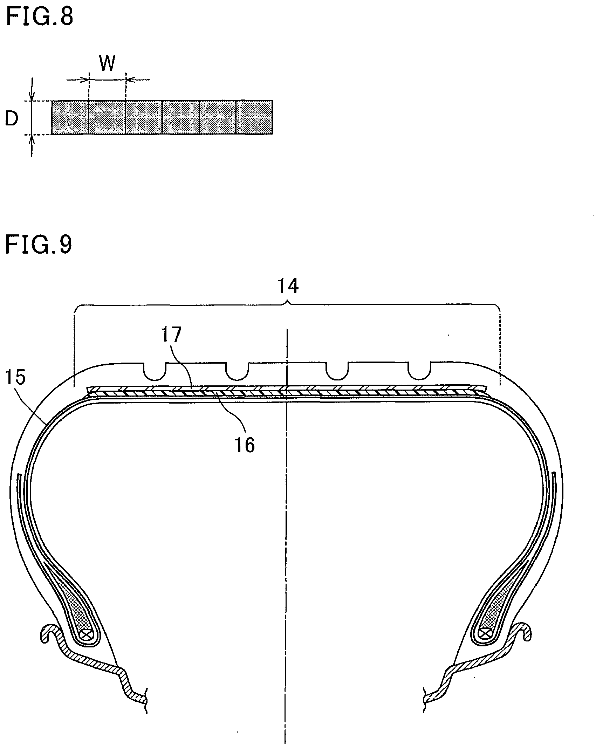

The inner periphery of a tire corresponding to a tread portion refers to an inner periphery of a tire located radially inside a tread portion which contacts the road surface. The inner periphery of a tire corresponding to a breaker refers to an inner periphery of a tire located radially inside a breaker. The breaker refers to a component placed inside a tread and radially outside a carcass. Specifically, it is a component shown as the breaker 16 in Fig. 9, for example.

Unvulcanized tires are usually vulcanized using bladders. During the vulcanization, such a bladder inflates and closely attaches to the inner periphery (innerliner) of the tire. Hence, a mold release agent is usually applied to the inner periphery (innerliner) of the tire to avoid adhesion between the bladder and the inner periphery (innerliner) of the tire after completion of the vulcanization.

The mold release agent is usually a water-soluble paint or a mold-releasing rubber. However, the presence of the mold release agent on the inner periphery of a tire may impair the adhesion between the sealant and the inner periphery of the tire. For this reason, the mold release agent is preferably preliminarily removed from the inner periphery of a tire. In particular, the mold release agent is more preferably preliminarily removed at least from a region of the tire inner periphery in which application of the sealant begins. Still more preferably, the mold release agent is preliminary removed from the entire region of the tire inner periphery where the sealant is to be applied. In this case, the sealant adheres better to the tire inner periphery and therefore a self-sealing tire having higher sealing performance can be produced.

The mold release agent may be removed from the tire inner periphery by any method, including known methods such as buffing treatment, laser treatment, high pressure water washing, or removal with a detergent (preferably a neutral detergent).

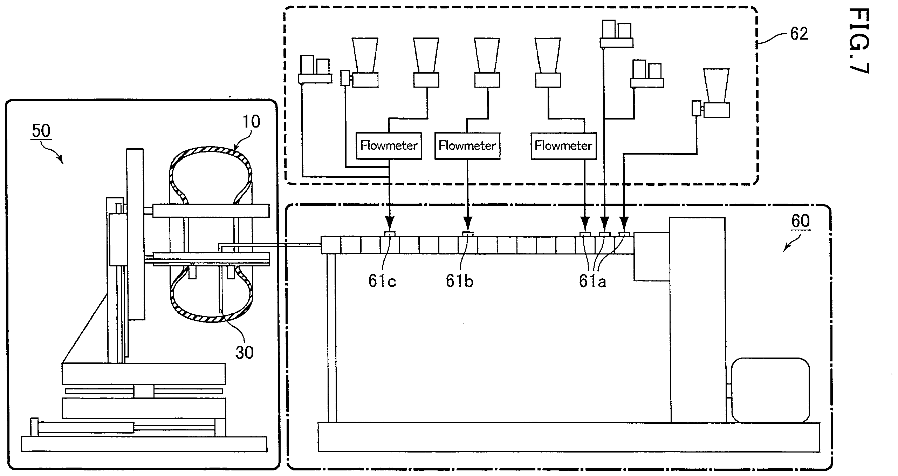

An example of a production facility used in the method for producing a self-sealing tire will be briefly described referring to Fig. 7.

The production facility includes a twin screw kneading extruder 60, a material feeder 62 for supplying raw materials to the twin screw kneading extruder 60, and a rotary drive device 50 which fixes and rotates a tire 10 while moving the tire in the width and radial directions of the tire. The twin screw kneading extruder 60 has five supply ports 61, specifically, including three upstream supply ports 61a, one midstream supply port 61b, and one downstream supply port 61c. Further, the outlet of the twin screw kneading extruder 60 is connected to a nozzle 30.

The raw materials are sequentially supplied from the material feeder 62 to the twin screw kneading extruder 60 through the supply ports 61 of the twin screw kneading extruder 60 and then kneaded in the twin screw kneading extruder 60, whereby they are sequentially prepared into a sealant. The prepared sealant is continuously discharged from the nozzle 30 connected to the outlet of the twin screw kneading extruder 60. The tire is traversed and/or moved up and down (moved in the width direction and/or the radial direction of the tire) while being rotated by the tire drive device, and the sealant discharged from the nozzle 30 is sequentially applied directly to the inner periphery of the tire, whereby the sealant can be continuously and spirally attached to the tire inner periphery. In other words, the sealant can be continuously and spirally attached to the inner periphery of a tire by sequentially applying the sealant continuously discharged from a continuous kneader (especially twin screw kneading extruder) directly to the inner periphery of the tire while rotating and simultaneously moving the tire in the width direction and/or the radial direction of the tire.

Such a continuous and spiral attachment of the sealant to the tire inner periphery can prevent deterioration of tire uniformity, thereby enabling the production of a self-sealing tire excellent in weight balance. Moreover, the continuous and spiral attachment of the sealant to the tire inner periphery allows for the formation of a sealant layer in which the sealant is uniformly provided in the circumferential and width directions of the tire, and especially in the circumferential direction of the tire. Thus, a self-sealing tire excellent in sealing performance can be stably produced with high productivity. The sealant is preferably attached without overlapping in the width direction, more preferably without gaps. In this case, deterioration of tire uniformity can be more prevented and a more uniform sealant layer can be formed.

To suitably produce a self-sealing tire more excellent in uniformity and sealing performance, the sealant preferably has a generally constant cross-sectional shape in the direction along which the sealant is applied (in the longitudinal direction).

The generally constant cross-sectional shape means that the sealant has a substantially constant cross-sectional shape, which is indicated by the fact that the cross-sectional area of the sealant (the cross-sectional area of a cross section of the sealant orthogonal to the direction along which the sealant is applied (the longitudinal direction)) varies within a range of 95 to 105%, preferably 98 to 102%, more preferably 99 to 101%.

The raw materials are sequentially supplied to a continuous kneader (especially twin screw kneading extruder) which sequentially prepares a sealant. The prepared sealant is continuously discharged from a nozzle connected to the outlet of the continuous kneader (especially twin screw kneading extruder) and the discharged sealant is sequentially applied directly to the inner periphery of a tire. In this manner, a self-sealing tire can be produced with high productivity.

The sealant layer is preferably formed by continuously and spirally applying a generally string-shaped sealant to the inner periphery of a tire. In this case, a sealant layer formed of a generally string-shaped sealant provided continuously and spirally around the inner periphery of a tire can be formed on the inner periphery of the tire. The sealant layer may be formed of a laminate of the sealant, but preferably consists of one layer of the sealant.

In the case of a generally string-shaped sealant, a sealant layer consisting of one layer of the sealant can be formed by continuously and spirally applying the sealant to the inner periphery of a tire. In the case of a generally string-shaped sealant, since the applied sealant has a certain thickness, even a sealant layer consisting of one layer of the sealant allows for prevention of deterioration of tire uniformity and therefore a self-sealing tire having an excellent weight balance and good sealing performance can be produced. Moreover, since it is sufficient to only apply one layer of the sealant without laminating layers of the sealant, a self-sealing tire can be produced with higher productivity. To suitably produce a self-sealing tire excellent in uniformity and sealing performance with high productivity, the sealant layer is preferably formed by continuously applying a piece of the sealant to the inner periphery of a tire. Further, the sealant layer is more preferably formed of one layer of the sealant to maintain the uniformity.

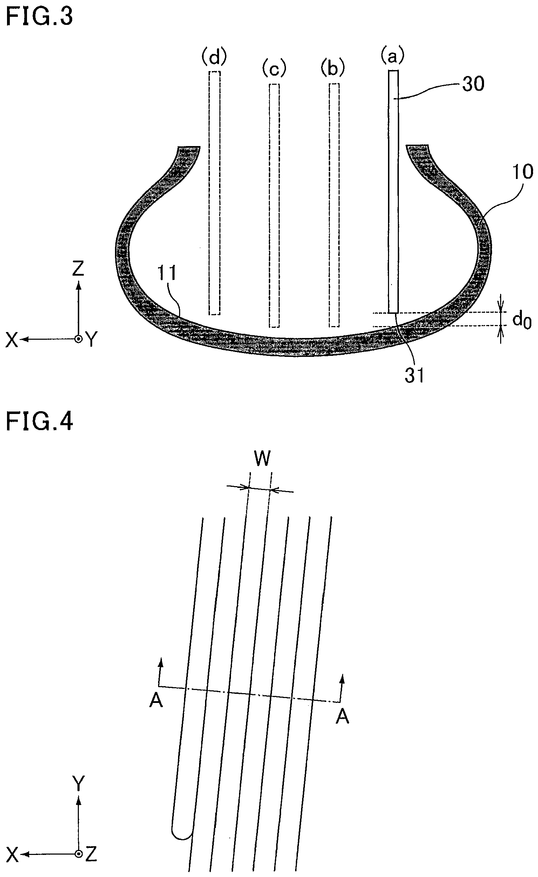

The number of turns of the sealant around the inner periphery of the tire is preferably 20 to 70, more preferably 20 to 60, still more preferably 35 to 50, because then deterioration of tire uniformity can be prevented and a self-sealing tire having an excellent weight balance and good sealing performance can be produced with higher productivity. Here, two turns means that the sealant is applied such that it makes two laps around the inner periphery of the tire. In Fig. 4, the number of turns of the sealant is six.

Use of a continuous kneader (especially twin screw kneading extruder) enables preparation (kneading) of a sealant and discharge (application) of the sealant simultaneously and continuously, and thus a sealant that is highly viscous and highly adhesive and difficult to handle can be directly applied to the tire inner periphery without handling it and a self-sealing tire can be produced with high productivity. If a sealant is prepared by kneading a mixture with a curing agent in a batch kneader, the time period from preparing a sealant to applying the sealant to a tire is not constant. In contrast, if a sealant is sequentially prepared by mixing raw materials including an organic peroxide using a continuous kneader (especially twin screw kneading extruder), and the sealant is sequentially applied to the inner periphery of a tire, the time period from preparing a sealant to applying the sealant to a tire is constant. Therefore, when the sealant is applied through a nozzle, a stable amount of the sealant is discharged from the nozzle and, further, deterioration of the adhesion of the sealant to the tire is suppressed and a constant adhesion is obtained. For this reason, even a sealant that is highly viscous and highly adhesive and difficult to handle can be precisely applied to the tire inner periphery and a self-sealing tire of a consistent quality can be stably produced.

By continuously performing mixing of raw materials and attachment of the prepared sealant, a sealant layer can be formed of a sealant of a substantially consistent quality and a self-sealing tire more excellent in uniformity and sealing performance can be produced.

The substantially consistent quality means that the sealant has substantially constant composition and degree of crosslinking, which is indicated by the fact that the viscosity at 40°C of the sealant varies within a range of 95 to 105%, preferably 98 to 102%, more preferably 99 to 101%.

The following describes methods for applying the sealant to the inner periphery of a tire.

<First embodiment>

According to a first embodiment, a self-sealing tire can be produced, for example, by performing the Step (1), Step (2), and Step (3) below in the process of applying an adhesive sealant through a nozzle to the inner periphery of a tire while rotating the tire and moving at least one of the tire and the nozzle in the width direction of the tire: Step (1) of measuring the distance between the inner peripheral surface of the tire and the tip of the nozzle using a non-contact displacement sensor; Step (2) of moving at least one of the tire and the nozzle in the radial direction of the tire according to the measurement to adjust the gap between the inner peripheral surface of the tire and the tip of the nozzle to a predetermined distance; and Step (3) of applying the sealant to the inner periphery of the tire after the gap is adjusted.

The gap between the inner peripheral surface of the tire and the tip of the nozzle can be maintained at a constant distance by measuring the distance between the inner peripheral surface of the tire and the tip of the nozzle using a non-contact displacement sensor and feeding back the measurement. Moreover, since the sealant is applied to the tire inner periphery while maintaining the gap at a constant distance, the sealant can have a uniform thickness without being affected by variations in tire shape and irregularities at joint portions or the like. Furthermore, since it is not necessary to enter the coordinate data of each tire having a different size as in the conventional art, the sealant can be efficiently applied.

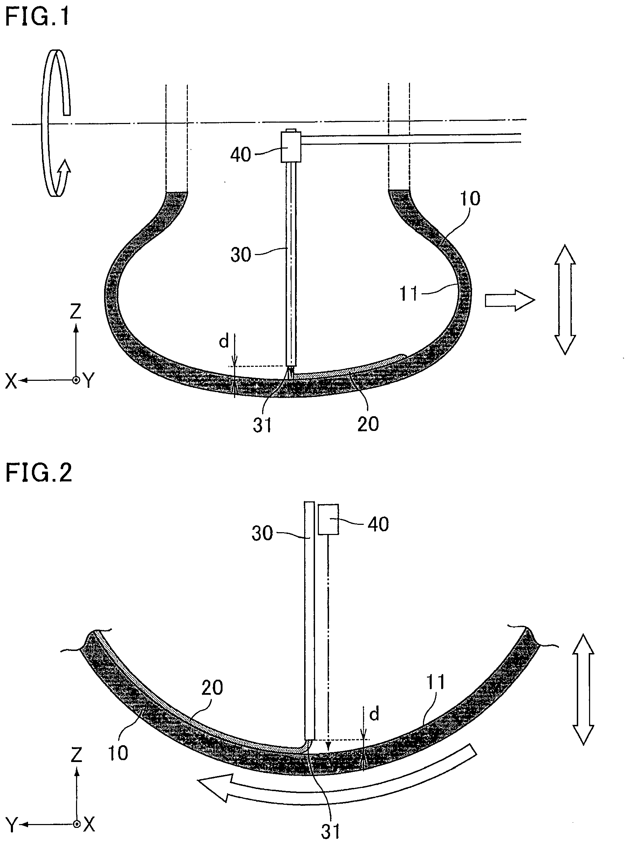

Fig. 1 is an explanatory view schematically showing an example of an applicator used in a method for producing a self-sealing tire of the present invention. Moreover, Fig. 2 is an enlarged view showing the vicinity of the tip of a nozzle provided with the applicator shown in Fig. 1.

Fig. 1 shows a cross section of a part of a tire 10 in the meridional direction (a cross section taken along a plane including the width and radial directions of the tire) . Fig. 2 shows a cross section of a part of the tire 10 taken along a plane including the circumferential and radial directions of the tire. In Fig. 1 and Fig. 2, the width direction (axis direction) of the tire is indicated by an arrow X, the circumferential direction of the tire is indicated by an arrow Y, and the radial direction of the tire is indicated by an arrow Z.

The tire 10 is mounted on a rotary drive device (not shown) which fixes and rotates a tire while moving the tire in the width and radial directions of the tire. The rotary drive device allows for the following independent operations: rotation around the axis of the tire, movement in the width direction of the tire, and movement in the radial direction of the tire.

The rotary drive device includes a controller (not shown) capable of controlling the amount of movement in the radial direction of the tire. The controller may be capable of controlling the amount of movement in the width direction of the tire and/or the rotational speed of the tire.

A nozzle 30 is mounted on the tip of an extruder (not shown) and can be inserted into the inside of the tire 10. Then an adhesive sealant 20 extruded from the extruder is discharged from the tip 31 of the nozzle 30.

A non-contact displacement sensor 40 is mounted on the nozzle 30 to measure a distance d between the inner peripheral surface 11 of the tire 10 and the tip 31 of the nozzle 30.

Thus, the distance d to be measured by the non-contact displacement sensor is the distance in the radial direction of the tire between the inner peripheral surface of the tire and the tip of the nozzle.

According to the method for producing a self-sealing tire of the present invention, the tire 10 formed through a vulcanization step is first mounted on the rotary drive device, and the nozzle 30 is inserted into the inside of the tire 10. Then, as shown in Fig. 1 and Fig. 2, the tire 10 is rotated and simultaneously moved in the width direction while the sealant 20 is discharged from the nozzle 30, thereby continuously applying the sealant to the inner periphery 11 of the tire 10. The tire 10 is moved in the width direction according to the pre-entered profile of the inner periphery 11 of the tire 10.

The sealant 20 preferably has a generally string shape as described later. More specifically, the sealant preferably maintains a generally string shape when the sealant is applied to the inner periphery of the tire. In this case, the generally string-shaped sealant 20 is continuously and spirally attached to the inner periphery 11 of the tire 10.

The generally string shape as used herein refers to a shape having a certain width and a certain thickness and having a length longer than the width. Fig. 4 schematically shows an example of a generally string-shaped sealant continuously and spirally attached to the inner periphery of the tire. Moreover, Fig. 8 schematically shows an example of a cross section of the sealant shown in Fig. 4 when the sealant is cut along the A-A straight line orthogonal to the direction along which the sealant is applied (the longitudinal direction). Thus, the generally string-shaped sealant has a certain width (length indicated by W in Fig. 8) and a certain thickness (length indicated by D in Fig. 8). The width of the sealant means the width of the applied sealant. The thickness of the sealant means the thickness of the applied sealant, more specifically the thickness of the sealant layer.

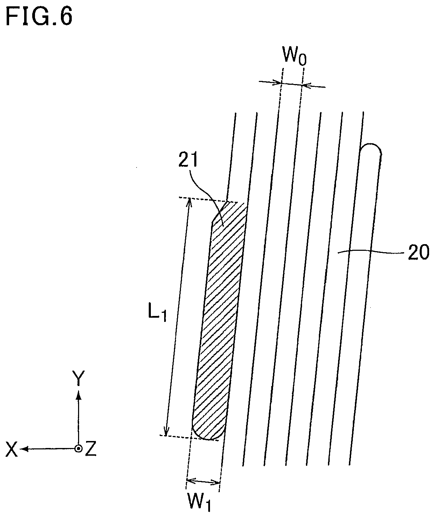

Specifically, the generally string-shaped sealant is a sealant having a thickness (thickness of the applied sealant, thickness of the sealant layer, length indicated by D in Fig. 8, T in Expression (I)) satisfying a preferable numerical range and a width (width of the applied sealant, length indicated by W in Fig. 4, length indicated by $W_0$ in Fig. 6) satisfying a preferable numerical range as described later, more preferably a sealant having a ratio of the thickness to the width of the sealant [(thickness of sealant)/(width of sealant)] satisfying a preferable numerical range as described later. The generally string-shaped sealant is also a sealant having a cross-sectional area satisfying a preferable numerical range as described later.

According to the method for producing a self-sealing tire of the present invention, the sealant is applied to the inner periphery of the tire by the following Steps (1) to (3).

<Step (1)>

As shown in Fig. 2, the distance d between the inner peripheral surface 11 of the tire 10 and the tip 31 of the nozzle 30 is measured with the non-contact displacement sensor 40 before the application of the sealant 20. The distance d is measured every time the sealant 20 is applied to the inner periphery 11 of the tire 10 from the beginning to the ending of the application of the sealant 20.

<Step (2)>

The distance d data is transmitted to the controller of the rotary drive device. According to the data, the controller controls the amount of movement in the radial direction of the tire so that the gap between the inner peripheral surface 11 of the tire 10 and the tip 31 of the nozzle 30 is adjusted to a predetermined distance.

<Step (3)>

The sealant 20 is continuously discharged from the tip 31 of the nozzle 30 and therefore is applied to the inner periphery 11 of the tire 10 under conditions where the above gap is controlled. Through the above Steps (1) to (3), the sealant 20 having a uniform thickness can be applied to the inner periphery 11 of the tire 10.

Fig. 3 is an explanatory view schematically showing the positional relationship of the nozzle to the tire.

According to the present invention, as shown in Fig. 3, the sealant can be applied while maintaining the gap between the inner peripheral surface 11 of the tire 10 and the tip 31 of the nozzle 30 at a predetermined distance $d_0$ during the movement of the nozzle 30 to positions (a) to (d) relative to the tire 10.

To more suitably achieve the effects of the present invention, the controlled distance $d_0$ is preferably 0.3 mm or more, more preferably 1.0 mm or more. If the distance is less than 0.3 mm, the tip of the nozzle is too close to the inner peripheral surface of the tire, which makes it difficult to allow the sealant having a predetermined thickness to be applied. The controlled distance $d_0$ is also preferably 3.0 mm or less, more preferably 2.0 mm or less. If the distance is more than 3.0 mm, the sealant cannot be attached well to the tire, which may result in reduced production efficiency.

The controlled distance $d_0$ refers to the distance in the radial direction of the tire between the inner peripheral surface of the tire and the tip of the nozzle after the distance is controlled in Step (2).

To more suitably achieve the effects of the present invention, the controlled distance $d_0$ is preferably 30% or less, more preferably 20% or less of the thickness of the applied sealant. The controlled distance $d_0$ is also preferably 5% or more, more preferably 10% or more of the thickness of the applied sealant.

The thickness of the sealant (the thickness of the applied sealant, the thickness of the sealant layer, the length indicated by D in Fig. 8, T in Expression (I)) is not particularly limited. To more suitably achieve the effects of the present invention, the thickness of the sealant is preferably 1.0 mm or more, more preferably 1.5 mm or more, still more preferably 2.0 mm or more, particularly preferably 2.5 mm or more. Also, the thickness of the sealant is preferably 10 mm or less, more preferably 8.0 mm or less, still more preferably 5.0 mm or less. If the thickness is less than 1.0 mm, a puncture hole formed in the tire is difficult to reliably seal. Also, a thickness of more than 10 mm is not preferred because tire weight increases though little difference is made in the effect of sealing puncture holes. The thickness of the sealant can be controlled by adjusting the rotational speed of the tire, the rate of movement in the width direction of the tire, the distance between the tip of the nozzle and the inner peripheral surface of the tire, or the like.

The sealant preferably has a substantially constant thickness (thickness of the applied sealant, thickness of the sealant layer) . In this case, deterioration of tire uniformity can be prevented and a self-sealing tire more excellent in weight balance can be produced.

The substantially constant thickness as used herein means that the thickness varies within a range of 90 to 110%, preferably 95 to 105%, more preferably 98 to 102%, still more preferably 99 to 101%.

According to the present invention, to reduce clogging of the nozzle so that excellent operational stability can be obtained and to more suitably achieve the effects of the present invention, a generally string-shaped sealant is preferably used and more preferably spirally attached to the inner periphery of a tire. However, a sealant not having a generally string shape may also be used and applied by spraying onto the tire inner periphery.

In the case of a generally string-shaped sealant, the width of the sealant (the width of the applied sealant, the length indicated by W in Fig. 4) is not particularly limited. To more suitably achieve the effects of the present invention, the width of the sealant is preferably 0.8 mm or more, more preferably 1.3 mm or more, still more preferably 1.5 mm or more. If the width is less than 0.8 mm, the number of turns of the sealant around the tire inner periphery increases, which may result in reduced production efficiency. The width of the sealant is also preferably 18 mm or less, more preferably 13 mm or less, still more preferably 9.0 mm or less, particularly preferably 7. 0 mm or less, most preferably 6.0 mm or less, still most preferably 5.0 mm or less. If the width is more than 18 mm, a weight imbalance may be more likely to occur.

The ratio of the thickness of the sealant (the thickness of the applied sealant, the thickness of the sealant layer, the length indicated by D in Fig. 8, T in Expression (I)) to the width of the sealant (the width of the applied sealant, the length indicated by W in Fig. 4) [(thickness of sealant)/(width of sealant)] is preferably 0.6 to 1.4, more preferably 0.7 to 1.3, still more preferably 0.8 to 1.2, particularly preferably 0.9 to 1.1. A ratio closer to 1.0 results in a sealant having an ideal string shape, so that a self-sealing tire having high sealing performance can be produced with higher productivity.

To more suitably achieve the effects of the present invention, the cross-sectional area of the sealant (the cross-sectional area of the applied sealant, the area calculated by $D \times W$ in Fig. 8) is preferably 0.8 $mm^2$ or more, more preferably 1.95 $mm^2$ or more, still more preferably 3.0 $mm^2$ or more, particularly preferably 3.75 $mm^2$ or more, while it is preferably 180 $mm^2$ or less, more preferably 104 $mm^2$ or less, still more preferably 45 $mm^2$ or less, particularly preferably 35 $mm^2$ or less, most preferably 25 $mm^2$ or less.

The width of the region where the sealant is attached (hereinafter also referred to as the width of the attached region or the width of the sealant layer, and corresponding to the length calculated by 6 x W in Fig. 4 or the length calculated by $W_1 + 6 \times W_0$ in Fig. 6) is not particularly limited. To more suitably achieve the effects of the present invention, the width is preferably 80% or more, more preferably 90% or more, still more preferably 100% or more, but preferably 120% or less, more preferably 110% or less, of the tread contact width.

To more suitably achieve the effects of the present invention, the width of the sealant layer is preferably 85 to 115%, more preferably 95 to 105% of the width of the breaker of the tire (the length of the breaker in the width direction of the tire).

Herein, when the tire is provided with a plurality of breakers, the length of the breaker in the width direction of the tire refers to the length of the breaker that is the longest in the width direction of the tire, among the plurality of breakers, in the width direction of the tire.

Herein, the tread contact width is determined as follows: a no-load and normal condition tire mounted to a normal rim and filled with a normal internal pressure is contacted with a plane at a camber angle of 0 degrees while a normal load is applied to the tire, and then the outermost contact position in the tire axis direction is defined as "contact edge Te". The distance in the tire axis direction between the contact edges Te and Te is defined as tread contact width TW. The dimensions and the like of tire components are measures determined under the above normal conditions, unless otherwise stated.

The "normal rim" refers to a rim specified for each tire by various standards in a standard system containing standards according to which tires are provided, and may be "standard rim" in JATMA, "design rim" in TRA, or "measuring rim" in ETRTO. Moreover, the "normal internal pressure" refers to an air pressure specified for each tire by various standards in a standard system containing standards according to which tires are provided, and may be "maximum air pressure" in JATMA, a maximum value shown in Table "TIRE LOAD LIMITS AT VARIOUS COLD INFLATION PRESSURES" in TRA, or "inflation pressure" in ETRTO. In the case of tires for passenger vehicles, the normal internal pressure is 180 kPa.

The "normal load" refers to a load specified for each tire by various standards in a standard system containing standards according to which tires are provided, and may be "maximum load capacity" in JATMA, a maximum value shown in Table "TIRE LOAD LIMITS AT VARIOUS COLD INFLATION PRESSURES" in TRA, or "load capacity" in ETRTO. In the case of tires for passenger vehicles, the normal load is a 88% load specified above.

The rotational speed of the tire during the application of the sealant is not particularly limited. To more suitably achieve the effects of the present invention, the rotational speed is preferably 5 m/min or higher, more preferably 10 m/min or higher, while it is preferably 30 m/min or lower, more preferably 20 m/min or lower. If the rotational speed is lower than 5 m/min or higher than 30 m/min, a sealant having a uniform thickness cannot be readily applied.

In the present invention, the use of a non-contact displacement sensor can reduce the risk of troubles caused by adhesion of the sealant to the sensor. The non-contact displacement sensor used in the present invention is not particularly limited as long as the sensor can measure the distance between the inner peripheral surface of the tire and the tip of the nozzle. Examples include laser sensors, photosensors, and capacitance sensors. These sensors may be used alone or in combinations of two or more. In particular, for measurement of rubber, laser sensors or photosensors are preferred, and laser sensors are more preferred. When a laser sensor is used, the distance between the inner peripheral surface of the tire and the tip of the nozzle can be determined as follows: the inner peripheral surface of the tire is irradiated with a laser; the distance between the inner peripheral surface of the tire and the tip of the laser sensor is determined based on the reflection of the laser; and the distance between the tip of the laser sensor and the tip of the nozzle is subtracted from the determined distance.

The location of the non-contact displacement sensor is not particularly limited as long as the distance between the inner peripheral surface of the tire and the tip of the nozzle before the application of the sealant can be measured. The sensor is preferably mounted on the nozzle, more preferably in a location to which the sealant will not adhere.

The number, size, and the like of the non-contact displacement sensor are also not particularly limited.

Since the non-contact displacement sensor is vulnerable to heat, the sensor is preferably protected with a heat insulator or the like and/or cooled with air or the like to avoid the influence of heat from the hot sealant discharged from the nozzle. This improves the durability of the sensor.

The first embodiment has been described based on an example in which the tire, not the nozzle, is moved in the width and radial directions of the tire. According to the present invention, the nozzle, not the tire, may be moved, or both the tire and the nozzle may be moved.

The rotary drive device preferably includes a means to increase the width of a tire at a bead portion. In the application of the sealant to a tire, increasing the width of the tire at a bead portion allows the sealant to be readily applied to the tire. Particularly when the nozzle is inserted around the inner peripheral surface of the tire mounted on the rotary drive device, the nozzle can be inserted only by parallel movement of the nozzle, which facilitates the control and improves productivity.

Any means that can increase the width of a tire at a bead portion can be used as the means to increase the width of a tire at a bead portion. Examples include a mechanism in which two devices each having a plurality of (preferably two) rolls which have a fixed positional relationship with one another are used and the devices move in the width direction of the tire. The devices may be inserted through both openings of the tire to the inside and allowed to increase the width of the tire at a bead portion.

In the production method, since the sealant which has been mixed in a twin screw kneading extruder or the like and, further, in which the crosslinking reaction is suppressed in the extruder is directly applied to the tire inner periphery, the crosslinking reaction begins upon the application and the sealant adheres well to the tire inner periphery and, at the same time, the crosslinking reaction suitably proceeds, whereby a self-sealing tire having high sealing performance can be produced. Thus, the self-sealing tire with the sealant applied therein does not need further crosslinking, thereby offering good productivity.

In the present invention, the self-sealing tire with the sealant applied therein may be further subjected to a crosslinking step, if necessary.

The self-sealing tire is preferably heated in the crosslinking step. This increases the rate of crosslinking of the sealant and allows the crosslinking reaction to more suitably proceed, thereby enabling the production of a self-sealing tire with higher productivity. The tire can be heated by any method, including known methods, but it may suitably be heated in an oven. The crosslinking step may be carried out, for example, by placing the self-sealing tire in an oven at 70°C to 190°C, preferably 150°C to 190°C, for 2 to 15 minutes.

The tire is preferably rotated in the circumferential direction of the tire during the crosslinking because then flowing of even the just-applied, easily flowing sealant can be prevented and the crosslinking reaction can be accomplished without deterioration of uniformity. The rotational speed is preferably 300 to 1,000 rpm. Specifically, for example, an oven equipped with a rotational mechanism may be used.

Even when the crosslinking step is not additionally performed, the tire is preferably rotated in the circumferential direction of the tire until the crosslinking reaction of the sealant is completed. In this case, flowing of even the just-applied, easily flowing sealant can be prevented and the crosslinking reaction can be accomplished without deterioration of uniformity. The rotational speed is the same as described for the crosslinking step.

In order to increase the rate of crosslinking of the sealant, the tire is preferably preliminarily warmed before the application of the sealant. In this case, a self-sealing tire can be produced with higher productivity. The temperature for pre-heating the tire is preferably 40°C to 100°C, more preferably 50°C to 70°C. When the tire is pre-heated within the temperature range described above, the crosslinking reaction suitably begins upon the application and more suitably proceeds and therefore a self-sealing tire having high sealing performance can be produced. Moreover, when the tire is pre-heated within the temperature range described above, the crosslinking step is not necessary and thus a self-sealing tire can be produced with high productivity.

In general, continuous kneaders (especially twin screw kneading extruders) are continuously operated. In the production of self-sealing tires, however, tires need to be replaced one after another upon completion of the application of the sealant to one tire. Here, in order to produce a higher quality self-sealing tire while suppressing deterioration of productivity, the following method (1) or (2) may be used. The method (1) or (2) may be appropriately selected depending on the situation because these methods have the following disadvantages: a deterioration in quality in the method (1) and an increase in cost in the method (2).

(1) The supply of the sealant to the inner periphery of the tire is controlled by running or stopping the continuous kneader and all the feeders simultaneously.
Specifically, upon completion of the application to one tire, the continuous kneader and all the feeders are simultaneously stopped, the tire is replaced with another tire, preferably within one minute, and the continuous kneader and all the feeders are simultaneously allowed to run to restart the application to the tire. By replacing tires quickly (preferably within one minute), a deterioration in quality can be suppressed.
(2) The supply of the sealant to the inner periphery of the tire is controlled by switching flow channels while allowing the continuous kneader and all the feeders to keep running.

Specifically, the continuous kneader is provided with another flow channel in addition to a nozzle for direct feeding to the tire inner periphery. The prepared sealant may be discharged from the another flow channel after completion of the application to one tire until completion of the replacement of tires. According to this method, since a self-sealing tire can be produced while the continuous kneader and all the feeders are kept running, the produced self-sealing tire can have higher quality.

Non-limiting examples of carcass cords used in the carcass of the self-sealing tire of the present invention include fiber cords and steel cords. Steel cords are preferred among these. In particular, steel cords formed of hard steel wire materials specified in JIS G 3506 are desirable. The use of strong steel cords, instead of commonly used fiber cords, as carcass cords in the self-sealing tire can greatly improve side cut resistance (resistance to cuts formed in the tire side portions due to driving over curbs) and thereby further improve the puncture resistance of the entire tire including the side portions.

The steel cord may have any structure. Examples include steel cords having a $1 \times n$ single strand structure, steel cords having a k + m layer strand structure, steel cords having a $1 \times n$ bundle structure, and steel cords having an $m \times n$ multi-strand structure. The steel cord having a $1 \times n$ single strand structure refers to a single-layered twisted steel cord prepared by intertwining n filaments. The steel cord having a k + m layer strand structure refers to a steel cord having a two-layered structure in which the two layers are different from each other in twist direction and twist pitch, and the inner layer includes k filaments and the outer layer includes m filaments. The steel cord having a $1 \times n$ bundle structure refers to a bundle steel cord prepared by intertwining bundles of n filaments . The steel cord having an $m \times n$ multi-strand structure refers to a multi-strand steel cord prepared by intertwining m strands prepared by first twisting n filaments together. Here, n represents an integer of 1 to 27; k represents an integer of 1 to 10; and m represents an integer of 1 to 3.

The twist pitch of the steel cord is preferably 13 mm or less, more preferably 11 mm or less, while it is preferably 5 mm or more, more preferably 7 mm or more.

The steel cord preferably contains at least one piece of preformed filament formed in the shape of a spiral. Such a preformed filament provides a relatively large gap within the steel cord to enhance rubber permeability and also maintain the elongation under low load, so that molding failure during vulcanization can be prevented.

The surface of the steel cord is preferably plated with brass, Zn, or the like to enhance initial adhesion to the rubber composition.

The steel cord preferably has an elongation of 0.5 to 1.5% under a load of 50 N. If the elongation under a load of 50 N is more than 1.5%, the reinforcing cords may exhibit reduced elongation under high load and thus disturbance absorption may not be maintained. Conversely, if the elongation under a load of 50 N is less than 0.5%, the cords may not exhibit sufficient elongation during vulcanization and thus molding failure may be caused. In view of the above, the elongation under a load of 50 N is more preferably 0.7% or more, but more preferably 1.3% or less.

The endcount of the steel cords is preferably 20 to 50 (ends/5 cm).

<Second embodiment>

The present inventors have found as a result of investigations that the method according to the first embodiment has the following disadvantage: a sealant having a generally string shape is occasionally difficult to attach to the inner periphery of a tire and, in particular, the sealant can be easily separated in the attachment beginning region. A second embodiment is characterized by that in the method for producing a self-sealing tire, the sealant is attached under conditions where the gap between the inner peripheral surface of the tire and the tip of the nozzle is adjusted to a distance

$d_1$, and then the sealant is attached under conditions where the gap is adjusted to a distance $d_2$ larger than the distance $d_1$. In this case, the gap between the inner peripheral surface of the tire and the tip of the nozzle is shortened at the beginning of the attachment, so that the width of the sealant corresponding to the attachment beginning region can be increased. As a result, a self-sealing tire can be easily produced in which a generally string-shaped adhesive sealant is continuously and spirally attached to the inner periphery of the tire corresponding to at least a tread portion, and at least one of the longitudinal ends of the sealant forms a wider portion having a larger width than the longitudinally adjoining portion. In this self-sealing tire, the sealant corresponding to the attachment beginning region has a larger width to improve adhesion in the region so that separation of the sealant in the region can be prevented.

The description of the second embodiment basically includes only features different from the first embodiment, and the contents overlapping the description of the first embodiment are omitted.

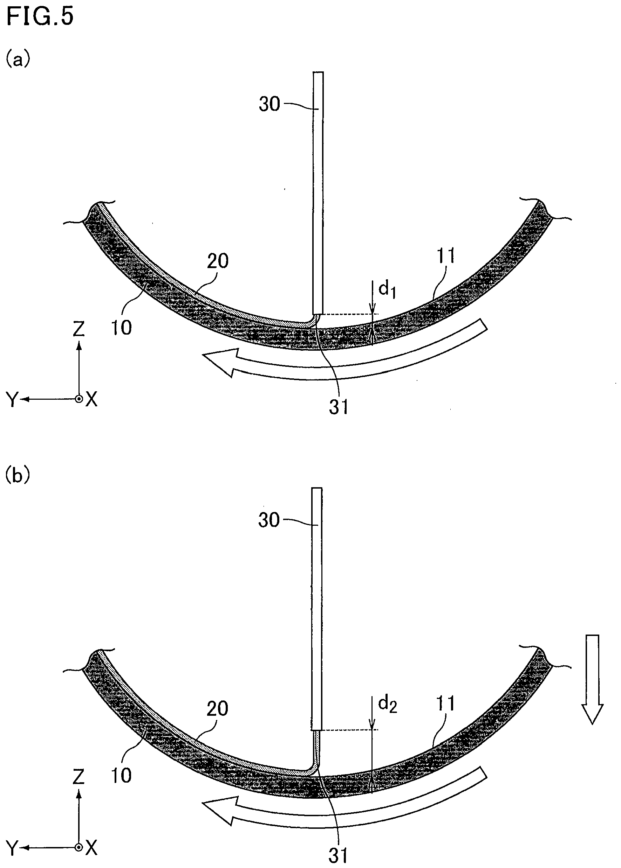

Figs. 5 are enlarged views showing the vicinity of the tip of a nozzle provided with the applicator shown in Fig. 1. Fig. 5 (a) illustrates a status immediately after the beginning of the sealant attachment and Fig. 5(b) illustrates a status after a lapse of a predetermined time.

Figs. 5 each show a cross section of a part of a tire 10 taken along a plane including the circumferential and radial directions of the tire. In Figs. 5, the width direction (axis direction) of the tire is indicated by an arrow X, the circumferential direction of the tire is indicated by an arrow Y, and the radial direction of the tire is indicated by an arrow Z.

According to the second embodiment, the tire 10 formed through a vulcanization step is first mounted on a rotary drive device, and a nozzle 30 is inserted into the inside of the tire 10. Then, as shown in Fig. 1 and Figs. 5, the tire 10 is rotated and simultaneously moved in the width direction while a sealant 20 is discharged from the nozzle 30, thereby continuously applying the sealant to the inner periphery 11 of the tire 10. The tire 10 is moved in the width direction according to, for example, the pre-entered profile of the inner periphery 11 of the tire 10.

Since the sealant 20 is adhesive and has a generally string shape, the sealant 20 is continuously and spirally attached to an inner periphery 11 of the tire 10 corresponding to a tread portion.

In this process, as shown in Fig. 5(a), the sealant 20 is attached under conditions where the gap between the inner peripheral surface 11 of the tire 10 and the tip 31 of the nozzle 30 is adjusted to a distance $d_1$ for a predetermined time from the beginning of the attachment. Then, after a lapse of the predetermined time, as shown in Fig. 5(b), the tire 10 is moved in the radial direction to change the gap to a distance $d_2$ larger than the distance $d_1$ and the sealant 20 is attached.

The gap may be adjusted from the distance $d_2$ back to the distance $d_1$ before completion of the sealant attachment. In view of production efficiency and tire weight balance, the distance $d_2$ is preferably maintained until the sealant attachment is completed.

Preferably, the distance $d_1$ is kept constant for a predetermined time from the beginning of the attachment, and after a lapse of the predetermined time the distance $d_2$ is kept constant. The distances $d_1$ and $d_2$ are not necessarily constant as long as they satisfy the relation of $d_1 < d_2$.

The distance $d_1$ is not particularly limited. To more suitably achieve the effects of the present invention, the distance $d_1$ is preferably 0.3 mm or more, more preferably 0.5 mm or more. If the distance $d_1$ is less than 0.3 mm, the tip of the nozzle is too close to the inner peripheral surface of the tire and thus the sealant can easily adhere to the nozzle and the nozzle may need to be cleaned more frequently. The distance $d_1$ is also preferably 2 mm or less, more preferably 1 mm or less. If the distance $d_1$ is more than 2 mm, the effect produced by the formation of a wider portion may not be sufficiently obtained.

The distance $d_2$ is also not particularly limited. To more suitably achieve the effects of the present invention, the distance $d_2$ is preferably 0.3 mm or more, more preferably 1 mm or more, while it is preferably 3 mm or less, more preferably 2 mm or less. The distance $d_2$ is preferably the same as the controlled distance $d_0$ described above.

Herein, the distances $d_1$ and $d_2$ between the inner peripheral surface of the tire and the tip of the nozzle each refer to the distance in the radial direction of the tire between the inner peripheral surface of the tire and the tip of the nozzle.

The rotational speed of the tire during the attachment of the sealant is not particularly limited. To more suitably achieve the effects of the present invention, the rotational speed is preferably 5 m/min or higher, more preferably 10 m/min or higher, while it is preferably 30 m/min or lower, more preferably 20 m/min or lower. If the rotational speed is lower than 5 m/min or higher than 30 m/min, a sealant having a uniform thickness cannot be readily attached.

The self-sealing tire according to the second embodiment can be produced through the steps described above.

Fig. 6 is an explanatory view schematically showing an example of a sealant attached to a self-sealing tire according to the second embodiment.

The generally string-shaped sealant 20 is wound in the circumferential direction of the tire and continuously and spirally attached. Here, one of the longitudinal ends of the sealant 20 forms a wider portion 21 having a larger width than the longitudinally adjoining portion. The wider portion 21 corresponds to the sealant attachment beginning region.

The width of the wider portion of the sealant (the width of the wider portion of the applied sealant, the length indicated by $W_1$ in Fig. 6) is not particularly limited. To more suitably achieve the effects of the present invention, the width of the wider portion is preferably 103% or more, more preferably 110% or more, still more preferably 120% or more of the width of the sealant other than the wider portion (the length indicated by $W_0$ in Fig. 6). If it is less than 103%, the effect produced by the formation of a wider portion may not be sufficiently obtained. The width of the wider portion of the sealant is also preferably 210% or less, more preferably 180% or less, still more preferably 160% or less of the width of the sealant other than the wider portion. If it is more than 210%, the tip of the nozzle needs to be placed excessively close to the inner peripheral surface of the tire to form a wider portion, and thus the sealant can easily adhere to the nozzle and the nozzle may need to be cleaned more frequently. In addition, tire weight balance may be impaired.

Preferably, the width of the wider portion of the sealant is substantially constant in the longitudinal direction, but may partially be substantially not constant. For example, the wider portion may have a shape in which the width is the largest in the attachment beginning region and gradually decreases in the longitudinal direction. The substantially constant width as used herein means that the width varies within a range of 90 to 110%, preferably 97 to 103%, more preferably 98 to 102%, still more preferably 99 to 101%.

The length of the wider portion of the sealant (the length of the wider portion of the applied sealant, the length indicated by $L_1$ in Fig. 6) is not particularly limited. To more suitably achieve the effects of the present invention, the length is preferably less than 650 mm, more preferably less than 500 mm, still more preferably less than 350 mm, particularly preferably less than 200 mm. If the length is 650 mm or more, the tip of the nozzle is placed close to the inner peripheral surface of the tire for a longer period of time, and thus the sealant can easily adhere to the nozzle and the nozzle may need to be cleaned more frequently. In addition, tire weight balance may be impaired. The sealant preferably has a shorter wider portion. However, in view of controlling the distance between the inner peripheral surface of the tire and the tip of the nozzle, the limit of the length of the wider portion is about 10 mm.

The width of the sealant other than the wider portion (the width of the applied sealant other than the wider portion, the length indicated by $W_0$ in Fig. 6) is not particularly limited. To more suitably achieve the effects of the present invention, the width is preferably 0.8 mm or more, more preferably 1.3 mm or more, still more preferably 1.5 mm or more. If the width is less than 0.8 mm, the number of turns of the sealant around the inner periphery of the tire increases, which may result in reduced production efficiency. The width of the sealant other than the wider portion is also preferably 18 mm or less, more preferably 13 mm or less, still more preferably 9. 0 mm or less, particularly preferably 7.0 mm or less, most preferably 6.0 mm or less, still most preferably 5.0 mm or less. If the width is more than 18 mm, a weight imbalance may be more likely to occur. $W_0$ is preferably the same as the above-described W.

Preferably, the width of the sealant other than the wider portion is substantially constant in the longitudinal direction, but may partially be substantially not constant.

The width of the region where the sealant is attached (hereinafter also referred to as the width of the attached region or the width of the sealant layer, and corresponding to the length calculated by $W_1 + 6 \times W_0$ in Fig. 6) is not particularly limited. To more suitably achieve the effects of the present invention, the width is preferably 80% or more, more preferably 90% or more, still more preferably 100% or more, but preferably 120% or less, more preferably 110% or less, of the tread contact width.

To more suitably achieve the effects of the present invention, the width of the sealant layer is preferably 85 to 115%, more preferably 95 to 105% of the width of the breaker of the tire (the length of the breaker in the width direction of the tire).

In the self-sealing tire according to the second embodiment, the sealant is preferably attached without overlapping in the width direction, more preferably without gaps.

In the self-sealing tire according to the second embodiment, the other longitudinal end (the end corresponding to the attachment ending region) of the sealant may form a wider portion having a larger width than the longitudinally adjoining portion.

The thickness of the sealant (the thickness of the applied sealant, the thickness of the sealant layer, the length indicated by D in Fig. 8, T in Expression (I)) is not particularly limited. To more suitably achieve the effects of the present invention, the thickness of the sealant is preferably 1.0 mm or more, more preferably 1.5 mm or more, still more preferably 2.0 mm or more, particularly preferably 2.5 mm or more, while it is preferably 10 mm or less, more preferably 8.0 mm or less, still more preferably 5.0 mm or less. If the thickness is less than 1.0 mm, a puncture hole formed in the tire is difficult to reliably seal. Also, a thickness of more than 10 mm is not preferred because tire weight increases though little difference is made in the effect of sealing puncture holes.

The sealant preferably has a substantially constant thickness (thickness of the applied sealant, thickness of the sealant layer) . In this case, deterioration of tire uniformity can be prevented and a self-sealing tire more excellent in weight balance can be produced.

The ratio of the thickness of the sealant (the thickness of the applied sealant, the thickness of the sealant layer, the length indicated by D in Fig. 8, T in Expression (I)) to the width of the sealant other than the wider portion (the width of the applied sealant other than the wider portion, the length indicated by $W_0$ in Fig. 6) [(thickness of sealant)/(width of sealant other than wider portion)] is preferably 0.6 to 1.4, more preferably 0.7 to 1.3, still more preferably 0.8 to 1.2, particularly preferably 0.9 to 1.1. A ratio closer to 1.0 results in a sealant having an ideal string shape, so that a self-sealing tire having high sealing performance can be produced with higher productivity.

To more suitably achieve the effects of the present invention, the cross-sectional area of the sealant (the cross-sectional area of the applied sealant, the area calculated by D × W in Fig. 8) is preferably 0.8 mm² or more, more preferably 1.95 mm² or more, still more preferably 3.0 mm² or more, particularly preferably 3.75 mm² or more, while it is preferably 180 mm² or less, more preferably 104 mm² or less, still more preferably 45 mm² or less, particularly preferably 35 mm² or less, most preferably 25 mm² or less.

According to the second embodiment, even when the sealant has a viscosity within the range described above, and particularly a relatively high viscosity, widening the sealant corresponding to the attachment beginning region can improve adhesion in the region so that separation of the sealant in the region can be prevented.

The self-sealing tire according to the second embodiment is preferably produced as described above. However, the self-sealing tire may be produced by any other appropriate method as long as at least one of the ends of the sealant is allowed to form a wider portion.

The above description, and particularly the description of the first embodiment explains the case where a non-contact displacement sensor is used in applying the sealant to the inner periphery of the tire. According to the present invention, the sealant may be applied to the inner periphery of the tire while controlling the movement of the nozzle and/or the tire according to the pre-entered coordinate data without measurement using a non-contact displacement sensor.

According to the present invention, a generally string-shaped sealant is continuously and spirally applied to the inner periphery of a tire under conditions satisfying the following Expression (I):

$$A = LS \times T \times \rho \times LD \leq 6100 \quad \text{Expression (I)}$$

wherein LS represents the length (mm) by which the position of the application shifts in the width direction of the tire per turn of the spiral; T represents the thickness (mm) of the sealant; p represents the specific gravity of the sealant; and LD represents the length (mm) of the difference in the circumferential direction of the tire between the beginning and ending points of the sealant application.

LS is determined depending on the width of the sealant. To more suitably achieve the effects of the present invention, LS is 0.9 mm or more, more preferably 1.4 mm or more, still more preferably 1.6 mm or more, particularly preferably 2.0 mm or more. If LS is less than 0.9 mm, the number of turns of the sealant around the inner periphery of the tire increases, which may result in reduced production efficiency. The width of the sealant is 7.1 mm or less, still most preferably 6.1 mm or less, even still most preferably 5.1 mm or less. If LS is more than 20 mm, a weight imbalance may be more likely to occur.

The thickness T of the sealant is preferably within the numerical range described above.

The specific gravity p of the sealant is preferably 0.91 to 0.99, more preferably 0.92 to 0.97. A person skilled in the art can control the specific gravity of the sealant by appropriately adjusting the formulation.

LD is preferably zero when emphasis is placed on tire uniformity. However, an LD of zero is not practical as described above. Thus, to stably produce a self-sealing tire excellent in uniformity with high productivity, LD is preferably 10 or more, more preferably 50 or more. In view of uniformity, LD is preferably 300 or less, more preferably 100 or less.

A smaller A indicates better uniformity. A is preferably 5,500 or less, more preferably 5,000 or less, still more preferably 4,500 or less, particularly preferably 3, 500 or less, most preferably 1,500 or less. The minimum value of A is not particularly limited. In view of productivity, A is preferably 200 or more, more preferably 800 or more.

EXAMPLES

The present invention is specifically described with reference to, but not limited to, examples 1-7, 9, 11 and 12 below (Examples 8 and 10 are not part of the present invention).

The chemicals used in the examples are collectively listed below.

Butyl rubber A: Regular butyl 065 (available from Japan Butyl Co., Ltd., Mooney viscosity $ML_{1+8}$ at 125°C = 32)
Liquid polymer A: Nisseki polybutene HV300 (available from JX Nippon Oil & Energy Corporation, kinematic viscosity at 40°C: 26, 000 mm²/s, kinematic viscosity at 100°C: 590 mm²/s, number average molecular weight: 1,400)
Liquid polymer B: Nisseki polybutene HV1900 (available from JX Nippon Oil & Energy Corporation, kinematic viscosity at 40°C: 160,000 mm²/s, kinematic viscosity at 100°C: 3,710 mm²/s, number average molecular weight: 2,900)
Plasticizer: DOP (dioctyl phthalate, available from Showa Chemical, specific gravity: 0.96, viscosity: 81 mPs·s)
Carbon black: N330 (available from Cabot Japan K. K., HAF grade, DBP oil absorption: 102 ml/100 g)
Crosslinking activator: VULNOC GM (available from Ouchi Shinko Chemical Industrial Co., Ltd., p-benzoquinone dioxime)

Crosslinking agent: NYPER NS (available from NOF Corporation, dibenzoyl peroxide (40% dilution, dibenzoyl peroxide: 40%, dibutyl phthalate: 48%), the amount shown in Table 1 is the amount of net benzoyl peroxide)
Sponge: ESH2 (thickness: 10 mm, specific gravity: 0.039, polyurethane) available from Inoac Corporation

<Production of self-sealing tire>

According to the formulation in Table 1, the chemicals were introduced into a twin screw kneading extruder as follows: the butyl rubber A, carbon black, and crosslinking activator were introduced from an upstream supply port; the liquid polybutene B was introduced from a midstream supply port; and the liquid polybutene A, plasticizer, and crosslinking agent were introduced from a downstream supply port. They were kneaded at 200 rpm at a barrel temperature of 100°C to prepare a sealant. The liquid polybutenes were heated to 50°C before being introduced from the supply port.

(Time for kneading materials)

Time for mixing butyl rubber A, butyl rubber B, carbon black, and crosslinking activator: 2 minutes

Time for mixing liquid polybutene A: 2 minutes
Time for mixing liquid polybutene B, plasticizer, and crosslinking agent: 1.5 minutes

[Table 1]

| Formulation (parts by mass) | Butyl rubber A ($ML_{1+8}$, 125°C: 32) | 100 |
|---|---|---|
| | Liquid polymer A (kinematic viscosity at 100°C: 590) | 100 |
| | Liquid polymer B (kinematic viscosity at 100°C: 3,710) | 100 |
| | Plasticizer (DOP) | 10 |
| | Carbon black (N330) | 10 |
| | Crosslinking activator (p-Benzoquinone dioxime) | 10 |
| | Crosslinking agent (Dibenzoyl peroxide) | 10 |

(Examples and Comparative Examples)

The sealant (temperature: 100°C, viscosity: 10,000 Pa·s (40°C), specific gravity: 0.93, generally string shape) prepared sequentially as above was extruded from the twin screw kneading extruder through a nozzle and continuously and spirally attached to the inner periphery of a tire (215/55R17, outer diameter: 668 mm, vulcanized tire, rotational speed of tire: 12 m/min, pre-heating temperature: 40°C) mounted on a rotary drive device, under the conditions shown in Table 2 (the sealant was spirally applied as shown in Figs. 1 to 4; the attached region had a width of 178 mm), thereby providing a self-sealing tire.
The width, thickness, and cross-sectional shape of the sealant were adjusted so as to be substantially constant in the longitudinal direction. Moreover, the viscosity of the sealant was measured at 40°C in conformity with JIS K 6833 using a rotational viscometer.
The width of the sealant of each example was obtained by subtracting 0.1 from the LS value shown in Table 2, i.e., "LS - 0.1".
The tire of Comparative Example 1 is a reference test product prepared without the application of a sealant.
The tires thus prepared were evaluated for the following items. Table 2 shows the results.

<Uniformity index>

Radial force variation (RFV) was measured in conformity with "Test procedures for automobile tire uniformity" set forth in JASO-C607:2000 using a tire uniformity tester. The measurement conditions included a rim of 7J, a tire rotational speed of 120 km/h, an air pressure of 220 kPa, and a load of 4. 6 kN. The measurement was performed 10 times for each example and the average of the 10 measurements was taken as the average high-speed RVF. The results are expressed as an index, with the result of Comparative Example 1 set equal to 100. A higher index indicates better uniformity. In view of handling stability of self-sealing tires, a uniformity index of 80 or higher is preferred.

<Fluidity at high temperatures>

The tire to which the sealant had been applied was subjected to crosslinking in an oven at 170°C for 10 minutes. Thereafter, the tire alone was allowed to stand vertically at 80°C for 24 hours and visually inspected as to whether the sealant flowed downward due to the gravity, and the results were evaluated based on the following criteria.

Good: No flowing occurred.
Fair: Slight flowing occurred.
Poor: Flowing occurred.

[Table 2]

| | | Compara-tive Exam-ple 1 | Compara-tive Exam-ple 2 | Compara-tive Exam-ple 3 | Exam-ple 1 | Exam-ple 2 | Exam-ple 3 | Exam-ple 4 | Exam-ple 5 | Exam-ple 6 | Exam-ple 7 | Exam-ple 8 | Exam-ple 9 | Exam-ple 10 | Exam-ple 11 | Exam-ple 12 |
|---|---|---|---|---|---|---|---|---|---|---|---|---|---|---|---|---|
| Condi-tions | T(mm) | - | 3.0 | 3.0 | 3.0 | 3.0 | 3.0 | 3.0 | 1.0 | 10.0 | 3.2 | 32 | 3.0 | 3.0 | 5.0 | 10.0 |
| | LS(mm) | - | 4.1 | 4.1 | 4.1 | 4.1 | 4.1 | 4.1 | 6.4 | 6.4 | 2.0 | 20.0 | 6.4 | 20.0 | 4.1 | 4.1 |
| | $\rho$ | - | 0.93 | 0.93 | 0.93 | 0.93 | 0.93 | 0.93 | 0.93 | 0.93 | 0.93 | 0.93 | 0.93 | 0.93 | 0.93 | 0.93 |
| | LD(mm) | - | 1000 | 600 | 0 | 100 | 300 | 525 | 1000 | 100 | 1000 | 100 | 100 | 100 | 100 | 100 |
| | A | - | 11439 | 6863 | 0 | 1144 | 3432 | 6005 | 5952 | 5952 | 5952 | 5952 | 1786 | 5580 | 1907 | 3813 |
| Evalua-tion re-sults | Uniformi-ty | 100 | 20 | 78 | 92 | 90 | 85 | 80 | 80 | 80 | 80 | 80 | 88 | 82 | 87 | 84 |
| | Fluidity | - | Good | Good | Good | Good | Good | Good | Good | Good | Good | Good | Good | Good | Good | Good |

Each of the self-sealing tires of the examples included a sealant layer located radially inside an innerliner and was produced by continuous and spiral application of a generally string-shaped sealant to the inner periphery of the tire under conditions satisfying the above Expression (I). Such self-sealing tires were less likely to lose the balance due to the sealant and thus deterioration of tire uniformity could be reduced. Further, such tires were also excellent in sealing performance.

REFERENCE SIGNS LIST

    10 Tire
    11 Inner periphery of tire
    14 Tread portion
    15 Carcass
    16 Breaker
    17 Band
    20 Sealant
    21 Wider portion
    30 Nozzle
    31 Tip of nozzle
    40 Non-contact displacement sensor
    50 Rotary drive device
    60 Twin screw kneading extruder
    61 (61a, 61b, 61c) Supply port
    62 Material feeder
    d, $d_0$, $d_1$, $d_2$ Distance between inner peripheral surface of tire and tip of nozzle

**Claims**

1.  A pneumatic tire (10), comprising
    a sealant layer located radially inside an innerliner,
    the pneumatic tire (10) being produced by continuous and spiral application of a generally string-shaped sealant (20) to an inner periphery (11) of the tire (10), **characterized in that** the spiral application of the sealant is made under conditions satisfying the following Expression (I):

    $$A = LS \times T \times \rho \times LD \leq 6100 \quad \text{Expression (I)}$$

    wherein LS represents a length in mm by which the position of the application shifts in the width direction of the tire (10) per turn of the spiral; T represents a thickness in mm of the sealant (20); $\rho$ represents a specific gravity of the sealant (20); and LD represents a length in mm of a difference in the circumferential direction of the tire (10) between beginning and ending points of the sealant application,
    wherein the length LS is 0.9 to 7.1 mm.

2.  The pneumatic tire (10) according to claim 1,
    wherein the thickness T of the sealant (20) is 1.0 to 10 mm.

3.  The pneumatic tire (10) according to claim 1 or 2,
    wherein the length LS by which the position of the application shifts in the width direction of the tire (10) per turn of the spiral is 2.0 to 7.1 mm.

4.  The pneumatic tire (10) according to any one of claims 1 to 3,
    wherein the sealant (20) has a generally constant cross-sectional shape.

5.  The pneumatic tire (10) according to any one of claims 1 to 4,
    wherein the sealant layer is formed of the sealant (20) of a consistent quality.

6. The pneumatic tire (10) according to any one of claims 1 to 5,
   wherein the sealant layer is formed by continuously applying a piece of the sealant (20) to the inner periphery (11) of the tire (10).

7. The pneumatic tire (10) according to any one of claims 1 to 6,
   wherein the sealant (20) comprises, relative to 100 parts by mass of a rubber component including a butyl-based rubber, 50 to 300 parts by mass of a liquid polymer, 0.5 to 40 parts by mass of a crosslinking agent, and 0.5 to 40 parts by mass of a crosslinking activator.

8. A method for producing a pneumatic tire (10) comprising a sealant layer located radially inside an innerliner, the method comprising continuous and spiral application of a generally string-shaped sealant to an inner periphery (11) of the tire (10) under conditions satisfying the following Expression (I):

$$A = LS \times T \times \rho \times LD \leq 6100 \qquad \text{Expression (I)}$$

wherein LS represents a length in mm by which the position of the application shifts in the width direction of the tire (10) per turn of the spiral; T represents a thickness in mm of the sealant (20) ; p represents a specific gravity of the sealant (20); and LD represents a length in mm of a difference in the circumferential direction of the tire (10) between beginning and ending points of the sealant application,
wherein the length LS is 0.9 to 7.1 mm.

**Patentansprüche**

1. Luftreifen (10), umfassend

   eine Dichtmittelschicht, die radial innen von einem Innerliner gelegen ist,
   wobei der Luftreifen (10) durch kontinuierliches und spiralförmiges Aufbringen eines im Allgemeinen streifenförmigen Dichtmittels (20) auf einen Innenumfang (11) des Reifens (10) hergestellt ist, **dadurch gekennzeichnet, dass** die spiralförmige Aufbringung des Dichtmittels unter Bedingungen vorgenommen wird, die den folgenden Ausdruck (I) erfüllen:

$$A = LS \times T \times \rho \times LD \leq 6100 \qquad \text{Ausdruck (I)}$$

   wobei LS eine Länge in mm darstellt, um welche sich die Position der Aufbringung in Richtung der Breite des Reifens (10) je Umdrehung der Spirale verschiebt; T ein Dicke in mm des Dichtmittels (20) darstellt; p ein spezifisches Gewicht des Dichtmittels (20) darstellt; und LD eine Länge in mm einer Differenz in der Umfangsrichtung des Reifens (10) zwischen Anfangs- und Endpunkten der Dichtmittelaufbringung darstellt,
   wobei die Länge LS 0,9 bis 7,1 mm beträgt.

2. Luftreifen (10) nach Anspruch 1, wobei die Dicke T des Dichtmittels (20) 1,0 bis 10 mm beträgt.

3. Luftreifen (10) nach Anspruch 1 oder 2, wobei die Länge LS, um welche die Position der Aufbringung sich in Richtung der Breite des Reifens (10) je Umdrehung der Spirale verschiebt, 2,0 bis 7,1 mm beträgt.

4. Luftreifen (10) nach einem der Ansprüche 1 bis 3, wobei das Dichtmittel (20) eine im Allgemeinen konstante Querschnittsform aufweist.

5. Luftreifen (10) nach einem der Ansprüche 1 bis 4, wobei die Dichtmittelschicht aus dem Dichtmittel (20) mit einer konsistenten Qualität gebildet ist.

6. Luftreifen (10) nach einem der Ansprüche 1 bis 5, wobei die Dichtmittelschicht durch kontinuierliches Aufbringen eines Stückes des Dichtmittels (20) auf den Innenumfang (11) des Reifens (10) gebildet ist.

7. Luftreifen (10) nach einem der Ansprüche 1 bis 6, wobei die Dichtmittelschicht (20) bezogen auf 100 Masseteile einer Kautschukkomponente, die einen Kautschuk auf Butylbasis umfasst, 50 bis 300 Masseteile eines flüssigen Polymers, 0,5 bis 40 Masseteile eines Vernetzungsmittels und 0,5 bis 40 Masseteile eines Vernetzungsaktivators umfasst.

**8.** Verfahren zum Herstellen eines Luftreifens (10), der eine Dichtmittelschicht umfasst, die radial innen von einem Innerliner gelegen ist,

wobei das Verfahren ein kontinuierliches und spiralförmiges Aufbringen eines im Allgemeinen streifenförmigen Dichtmittels auf einen Innenumfang (11) des Reifens (10) unter Bedingungen umfasst, die den folgenden Ausdruck (I)erfüllen:

$$A = LS \times T \times \rho \times LD \leq 6100 \qquad \text{Ausdruck (I)}$$

wobei LS eine Länge in mm darstellt, um welche sich die Position der Aufbringung in Richtung der Breite des Reifens (10) je Umdrehung der Spirale verschiebt; T ein Dicke in mm des Dichtmittels (20) darstellt; p ein spezifisches Gewicht des Dichtmittels (20) darstellt; und LD eine Länge in mm einer Differenz in der Umfangsrichtung des Reifens (10) zwischen Anfangs- und Endpunkten der Dichtmittelaufbringung darstellt,
wobei die Länge LS 0,9 bis 7,1 mm beträgt.

**Revendications**

**1.** Bandage pneumatique, comprenant
une couche de scellement située radialement à l'intérieur d'un doublage intérieur,
le bandage pneumatique (10) étant produit par application continue en spirale d'un produit de scellement généralement en forme de ruban (20) sur une périphérie intérieure (11) du pneumatique (10),
**caractérisé en ce que** l'application en spirale du produit de scellement est effectuée sous des conditions satisfaisant l'expression suivante (I):

$$A = LS \times T \times \rho \times LD \leq 6100 \qquad \text{Expression (I)}$$

dans laquelle LS représente une longueur, en millimètres, de laquelle la position de l'application est décalée dans la direction en largeur du pneumatique (10) à chaque spire de la spirale ;
T représente une épaisseur, en millimètres, du produit de scellement (20) ; p représente une densité spécifique du produit de scellement (20) ; et
LD représente une longueur, en millimètres, d'une différence dans la direction circonférentielle du pneumatique (10) entre un point de commencement et un point de terminaison de l'application du produit de scellement,

dans lequel la longueur LS est de 0,9 à 7,1 mm.

**2.** Bandage pneumatique (10) selon la revendication 1,
dans lequel l'épaisseur (T) du produit de scellement (20) est de 1,0 à 10 mm.

**3.** Bandage pneumatique (10) selon la revendication 1 ou 2,
dans lequel la longueur LS de laquelle la position de l'application est décalée dans la direction en largeur du pneumatique (10) à chaque spire de la spirale est de 2,0 à 7,1 mm.

**4.** Bandage pneumatique (10) selon l'une quelconque des revendications 1 à 3,
dans lequel le produit de scellement (20) a une forme de section transversale généralement constante.

**5.** Bandage pneumatique (10) selon l'une quelconque des revendications 1 à 4,
dans lequel la couche de scellement est formée d'un produit de scellement (20) de qualité homogène.

**6.** Bandage pneumatique (10) selon l'une quelconque des revendications 1 à 5,
dans lequel la couche de scellement est formée en appliquant en continu un morceau du produit de scellement (20) sur la périphérie intérieure (11) du pneumatique (10).

7.  Bandage pneumatique (10) selon l'une quelconque des revendications 1 à 6,
    dans lequel le produit de scellement (20) comprend, en relation à 100 parties en masse d'un composant de caoutchouc incluant un caoutchouc à base de butyle, de 50 à 300 parties en masse d'un polymère liquide, de 0,5 à 40 parties en masse d'un agent de réticulation, et de 0,5 à 40 parties en masse d'un activateur de réticulation.

8.  Procédé pour produire un bandage pneumatique (10) comprenant une couche de scellement située radialement à l'intérieur d'un doublage intérieur,
    le procédé comprenant l'étape consistant à appliquer en continu et en spirale un produit de scellement généralement en forme de ruban sur une périphérie intérieure (11) du pneumatique (10) sous des conditions satisfaisant l'expression suivante (I):

$$A = LS \times T \times \rho \times LD \leq 6100 \qquad \text{Expression (I)}$$

dans laquelle LS représente une longueur, en millimètres, de laquelle la position de l'application est décalée dans la direction en largeur du pneumatique (10) à chaque spire de la spirale ;
T représente une épaisseur, en millimètres, du produit de scellement (20) ;
$\rho$ représente une densité spécifique du produit de scellement (20) ; et
LD représente une longueur, en millimètres, d'une différence dans la direction circonférentielle du pneumatique (10) entre un point de commencement et un point de terminaison de l'application du produit de scellement,

dans lequel la longueur LS est de 0,9 à 7,1 mm.

## FIG.1

## FIG.2

FIG.3

FIG.4

# FIG.5

(a)

(b)

FIG.6

$W_0$

21

$L_1$

20

Y

X

Z

$W_1$

FIG.7

FIG.8

FIG.9

## FIG.10

## FIG.11

**EP 3 009 260 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001018609 A
- JP 2003000305 A
- JP 781 A
- EP 0302400 A1
- JP 2010528131 T
- JP 2014217953 A